(19) 

Europäisches
Patentamt

European
Patent Office

Office européen
des brevets

(11) **EP 4 465 708 A1**

(12) **EUROPEAN PATENT APPLICATION**
published in accordance with Art. 153(4) EPC

(43) Date of publication:
**20.11.2024 Bulletin 2024/47**

(21) Application number: **23762776.5**

(22) Date of filing: **21.02.2023**

(51) International Patent Classification (IPC):
**H04W 52/14** (2009.01)

(52) Cooperative Patent Classification (CPC):
**H04W 52/14; H04W 56/00; H04W 72/1268;**
**H04W 72/21; H04W 74/00**

(86) International application number:
**PCT/CN2023/077371**

(87) International publication number:
**WO 2023/165375 (07.09.2023 Gazette 2023/36)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **03.03.2022 CN 202210201572**

(71) Applicant: **Huawei Technologies Co., Ltd.**
**Shenzhen, Guangdong 518129 (CN)**

(72) Inventor: **FAN, Bo**
**Shenzhen, Guangdong 518129 (CN)**

(74) Representative: **Gill Jennings & Every LLP**
**The Broadgate Tower**
**20 Primrose Street**
**London EC2A 2ES (GB)**

(54) **COMMUNICATION METHOD AND APPARATUS**

(57)    A communication method and apparatus are provided, so that a terminal device performs a plurality of uplink transmissions simultaneously. The terminal device may determine at least two actual transmit powers based on expected transmit powers respectively corresponding to at least two uplink transmissions performed simultaneously, and a first maximum transmit power of the terminal device and/or second maximum transmit powers corresponding to the at least uplink transmissions, and then perform uplink transmission simultaneously based on the at least two actual transmit powers. In this way, the terminal device may determine actual transmit powers for the plurality of uplink transmissions performed simultaneously, to simultaneously perform the plurality of uplink transmissions (for example, simultaneously perform uplink transmission by using a plurality of stations or antenna panels), thereby improving an uplink throughput.

FIG. 5

**Description**

**CROSS-REFERENCE TO RELATED APPLICATIONS**

This application claims priority to Chinese Patent Application No. 202210201572.0, filed with the China National Intellectual Property Administration on March 3, 2022 and entitled "COMMUNICATION METHOD AND APPARATUS", which is incorporated herein by reference in its entirety.

**TECHNICAL FIELD**

This application relates to the field of communication technologies, and in particular, to a communication method and apparatus.

**BACKGROUND**

During uplink transmission, a terminal device needs to determine a transmit power that needs to be used, to avoid causing strong interference to a neighboring cell, and avoid causing a signal received by a network device to be excessively weak.

The network device may perform transmission with the terminal device based on one or more stations. Transmission based on a single station is referred to as single-station transmission, and transmission based on a plurality of stations is referred to as multi-station transmission. In addition, the terminal device may perform transmission with the network device based on one or more antenna panels (briefly referred to as panels below). Transmission based on a single panel is referred to as single-panel transmission, and transmission based on a plurality of panels is referred to as multi-panel transmission.

When the network device uses the plurality of stations, and/or the terminal device uses the plurality of panels, signal propagation paths through which uplink transmissions corresponding to the plurality of stations or panels pass may be different, and therefore corresponding path losses may also be different. Consequently, transmit powers needed for uplink transmissions corresponding to different stations or panels may also be different. Therefore, the terminal device needs to determine one transmit power for each station or panel.

Currently, the terminal device can perform transmission by using the plurality of stations or panels only in a time division manner, for example, performs transmission by using two stations or panels in two different slots respectively. In this way, at one moment, the terminal device can calculate only a transmit power used by a single station or panel for uplink transmission. According to the current method, the terminal device cannot implement simultaneous transmission performed a plurality of stations or panels.

**SUMMARY**

This application provides a communication method and apparatus, so that a terminal device performs a plurality of uplink transmissions simultaneously.

According to a first aspect, this application provides a communication method. The method may be applied to a terminal device, a component (for example, a processor, a chip, a circuit, or another component) disposed in the terminal device, or a software module. The terminal device is used as an example for description. The method may include: The terminal device determines at least two actual transmit powers based on at least two expected transmit powers, and a first maximum transmit power and/or at least two second maximum transmit powers, and then performs uplink transmission based on the at least two actual transmit powers, where the at least two expected transmit powers are in one-to-one correspondence with at least two uplink transmissions simultaneously performed by the terminal device, the first maximum transmit power is a maximum transmit power of the terminal device, the at least two second maximum transmit powers are in one-to-one correspondence with the at least two uplink transmissions, and the at least two actual transmit powers are in one-to-one correspondence with the at least two uplink transmissions.

According to the foregoing method, the terminal device may determine the actual transmit powers for the plurality of uplink transmissions performed simultaneously, to implement simultaneous performance of the plurality of uplink transmissions (for example, implement the simultaneous performance of the uplink transmissions by using a plurality of stations or antenna panels), thereby improving an uplink throughput.

In a possible design, when the terminal device determines the at least two actual transmit powers based on the at least two expected transmit powers and the first maximum transmit power, the terminal device may compare a sum of the at least two expected transmit powers with the first maximum transmit power, and then determine the at least two actual transmit powers based on a comparison result. In this way, the terminal device may determine the final actual transmit powers for the plurality of uplink transmissions based on a value relationship between the sum of the at least two expected transmit powers and the first maximum transmit power.

In a possible design, when the terminal device determines the at least two actual transmit powers based on the comparison result, and the comparison result is that the sum of the at least two expected transmit powers is less than or equal to the first maximum transmit power, the terminal device determines that the at least two actual transmit powers are the at least two expected transmit powers. When the comparison result is that the sum of the at least two expected transmit powers is greater than the first maximum transmit power, the terminal device reduces powers of a part or all of the at least two expected transmit powers, to obtain the at least two actual transmit powers; or when the comparison result is that the sum of the at least two expected transmit powers is greater than the first maximum transmit power, the terminal device determines the at least two actual transmit powers based on priorities of the at least two uplink transmissions. In this way, the total sum of the actual transmit powers corresponding to the plurality of uplink transmissions simultaneously performed by the terminal device does not exceed the maximum transmit power of the terminal device, and implementation is flexible.

In a possible design, the terminal device may reduce the powers of the part or all of the at least two expected transmit powers by using the following methods, to obtain the at least two actual transmit powers: The terminal device may reduce a first expected transmit power by a first value, and determine that the at least two actual transmit powers are a reduced first expected transmit power and an expected transmit power other than the first expected transmit power in the at least two expected transmit powers, where the first expected transmit power may be one of the at least two expected transmit powers, and the first value is a value greater than or equal to a difference between the sum of the at least two expected transmit powers and the first maximum transmit power. Alternatively, the terminal device may reduce each of the at least two expected transmit powers by a corresponding power reduction value, to obtain the at least two actual transmit powers, where the power reduction value corresponding to each expected transmit power may be determined based on a difference between the sum of the at least two expected transmit powers and the first maximum transmit power. By using the two methods, the actual transmit powers that meet a requirement may be obtained, so that the total sum of the actual transmit powers for the plurality of uplink transmissions does not exceed the maximum transmit power of the terminal device.

In a possible design, when determining the at least two actual transmit powers based on the priorities of the at least two uplink transmissions, the terminal device may sequentially reduce the at least two expected transmit powers in ascending order of the priorities of the at least two uplink transmissions, and determine at least two reduced expected transmit powers as the at least two actual transmit powers, where a sum of the at least two reduced expected transmit powers is less than or equal to the first maximum transmit power, and each reduced expected transmit power is greater than or equal to a first power value. In this way, the total sum of the actual transmit powers for the plurality of uplink transmissions does not exceed the maximum transmit power of the terminal device, and it can be further ensured that the actual transmit power for the uplink transmission with a higher priority is relatively higher, thereby improving transmission efficiency.

In a possible design, when determining the at least two actual transmit powers based on the at least two expected transmit powers and the at least two second maximum transmit powers, the terminal device may determine a corresponding actual transmit power based on a value relationship between each expected transmit power and a second maximum transmit power corresponding to each expected transmit power. In this way, the terminal device may use the smaller of an expected transmit power corresponding to each uplink transmission and a second maximum transmit power corresponding to each uplink transmission as an actual transmit power corresponding to each uplink transmission, so that the actual transmit power corresponding to each uplink transmission does not exceed the corresponding maximum transmit power.

In a possible design, when determining the at least two actual transmit powers based on the at least two expected transmit powers, and the first maximum transmit power and the at least two second maximum transmit powers, the terminal device may determine the at least two actual transmit powers based on the at least two expected transmit powers, and the first maximum transmit power and the at least two second maximum transmit powers and based on a first condition and a second condition, where the first condition may include: An actual transmit power corresponding to each uplink transmission is less than or equal to a second maximum transmit power corresponding to each uplink transmission; and the second condition may include: A sum of the at least two actual transmit powers is less than or equal to the first maximum transmit power. According to the foregoing method, when the plurality of uplink transmissions are performed simultaneously, it can be ensured that the actual transmit power for each uplink transmission does not exceed the corresponding maximum transmit power, and it can be further ensured that the total sum of all actual transmit powers does not exceed the maximum transmit power of the terminal device, thereby ensuring successful transmission.

In a possible design, when determining the at least two actual transmit powers based on the at least two expected transmit powers, and the first maximum transmit power and the at least two second maximum transmit powers and based on the first condition and the second condition, the terminal device may first compare a sum of the at least two expected transmit powers with the first maximum transmit power based on the second condition, and determine at least two first intermediate transmit powers based on a comparison result, where the at least two first intermediate transmit powers are in one-to-one correspondence with the at least two expected transmit powers; and then determine a corresponding actual transmit power based on a value relationship between a first intermediate transmit power corresponding to each expected transmit power and a second maximum transmit power corresponding to each expected transmit power and based on the first condition. In this way, the plurality of first intermediate transmit powers whose total sum does not exceed the maximum transmit power of the terminal device are first determined, and then the smaller of the first intermediate transmit power corresponding to each uplink transmission and the second maximum transmit power corresponding to each uplink transmission is used as the actual transmit power corresponding to the uplink transmission, so that the actual transmit powers that correspond to the plurality of uplink transmissions and that meet a condition can be flexibly determined.

In a possible design, when the terminal device determines the at least two first intermediate transmit powers based on the comparison result, and the comparison result is that the sum of the at least two expected transmit powers is less than or equal to the first maximum transmit power, the terminal device may determine that the at least two first intermediate transmit powers are the at least two expected transmit powers. When the comparison result is that the sum of the at least two expected transmit powers is greater than the first maximum transmit power, the terminal device may reduce powers of a part or all of the at least two expected transmit powers, to obtain the at least two first intermediate transmit powers; or when the comparison result is that the sum of the at least two expected transmit powers is greater than the first maximum transmit power, the terminal device may determine the at least two first intermediate transmit powers based on priorities of the at least two uplink transmissions. In this way, the total sum of the first intermediate transmit powers corresponding to the plurality of uplink transmissions simultaneously performed by the terminal device does not exceed the maximum transmit power of the terminal device, and implementation is flexible.

In a possible design, the terminal device may reduce the powers of the part or all of the at least two expected transmit powers by using the following methods, to obtain the at least two first intermediate transmit powers: The terminal device may reduce a first expected transmit power by a first value, and determine that the at least two first intermediate transmit powers are a reduced first expected transmit power and an expected transmit power other than the first expected transmit power in the at least two expected transmit powers, where the first expected transmit power is one of the at least two expected transmit powers, and the first value is a value greater than or equal to a difference between the sum of the at least two expected transmit powers and the first maximum transmit power. Alternatively, the terminal device may reduce each of the at least two expected transmit powers by a corresponding power reduction value, to obtain the at least two first intermediate transmit powers, where the power reduction value corresponding to each expected transmit power is determined based on a difference between the sum of the at least two expected transmit powers and the first maximum transmit power. By using the two methods, the first intermediate transmit powers that meet the second condition may be obtained, so that the total sum of the first intermediate transmit powers corresponding to the plurality of uplink transmissions does not exceed the maximum transmit power of the terminal device.

In a possible design, the first expected transmit power may be a largest expected transmit power in the at least two expected transmit powers, or may be an expected transmit power corresponding to a lowest path loss in the at least two expected transmit powers, or may be an expected transmit power corresponding to a 1st uplink transmission in the at least two expected transmit powers, or may be an expected transmit power corresponding to a last uplink transmission in the at least two expected transmit powers. In this way, the first expected transmit power may be flexibly selected based on an actual situation for power reduction.

In a possible design, the power reduction value corresponding to each expected transmit power may be a value for the at least two expected transmit powers that is obtained by equally dividing the difference between the sum of the at least two expected transmit powers and the first maximum transmit power; or the power reduction value corresponding to each expected transmit power may be determined based on a ratio of each expected transmit power to the sum of the at least two expected transmit powers and the difference between the sum of the at least two expected transmit powers and the first maximum transmit power. In this way, the power reduction value corresponding to each expected transmit power may be flexibly determined based on the difference between the sum of the at least two expected transmit powers and the first maximum transmit power.

In a possible design, when determining the at least two first intermediate transmit powers based on the priorities of the at least two uplink transmissions, the terminal device may sequentially reduce the at least two expected transmit powers in ascending order of the priorities of the at least two uplink transmissions, and determine at least two reduced expected transmit powers as the at least two first intermediate transmit powers, where a sum of the at least two reduced expected transmit powers is less than or equal to the first maximum transmit power, and each reduced expected transmit power is greater than or equal to a second power value. In this way, the second condition is met, and it can be further ensured that the first intermediate transmit power for the uplink transmission with a higher priority is relatively higher. Therefore, when the first intermediate transmit power is used as the actual transmit power, it is ensured that the actual transmit power for the uplink transmission with the higher priority is relatively higher, thereby improving transmission efficiency.

In a possible design, when determining the at least two actual transmit powers based on the at least two expected transmit powers, and the first maximum transmit power and the at least two second maximum transmit powers and based on the first condition and the second condition, the terminal device may first determine a corresponding second intermediate transmit power based on a value relationship between each expected transmit power and a second maximum transmit power corresponding to each expected transmit power and based on the first condition, to obtain at least two second intermediate transmit powers; and then compare a sum of the at least two second intermediate transmit powers with the first maximum transmit power based on the second condition, and determine the at least two actual transmit powers based on a comparison result. In this way, the smaller of the expected transmit power corresponding to each uplink transmission and the second maximum transmit power corresponding to each uplink transmission is first used as the second intermediate transmit power corresponding to the uplink transmission, and then the plurality of actual transmit powers whose total sum does not exceed the maximum transmit power of the terminal device are determined, so that the actual transmit powers that correspond to the plurality of uplink transmissions and that meet a condition may be flexibly determined.

In a possible design, when the terminal device determines the at least two actual transmit powers based on the comparison result, and the comparison result is that the sum of the at least two second intermediate transmit powers is less than or equal to the first maximum transmit power, the terminal device may determine that the at least two actual transmit powers are the at least two second intermediate transmit powers. When the comparison result is that the sum of the at least two second intermediate transmit powers is greater than the first maximum transmit power, the terminal device may reduce powers of a part or all of the at least two second intermediate transmit powers, to obtain the at least two actual transmit powers; or when the comparison result is that the sum of the at least two second intermediate transmit powers is greater than the first maximum transmit power, the terminal device may determine the at least two actual transmit powers based on priorities of the at least two uplink transmissions. In this way, the total sum of the actual transmit powers corresponding to the plurality of uplink transmissions simultaneously performed by the terminal device does not exceed the maximum transmit power of the terminal device, and implementation is flexible.

In a possible design, the terminal device may reduce the powers of the part or all of the at least two second intermediate transmit powers by using the following methods, to obtain the at least two actual transmit powers: The terminal device may reduce a second intermediate transmit power by a second value, and determine that the at least two actual transmit powers are a reduced second intermediate transmit power and a second intermediate transmit power other than the second intermediate transmit power in the at least two second intermediate transmit powers, where the second intermediate transmit power is one of the at least two second intermediate transmit powers, and the second value is a value greater than or equal to a difference between the sum of the at least two second intermediate transmit powers and the first maximum transmit power. Alternatively, the terminal device may reduce each of the at least two second intermediate transmit powers by a corresponding power reduction value, to obtain the at least two actual transmit powers, where the power reduction value corresponding to each second intermediate transmit power is determined based on a difference between the sum of the at least two second intermediate transmit powers and the first maximum transmit power. By using the two methods, the actual transmit powers that meet the second condition may be obtained, so that the total sum of the actual transmit powers corresponding to the plurality of uplink transmissions does not exceed the maximum transmit power of the terminal device.

In a possible design, the second intermediate transmit power may be a largest second intermediate transmit power in the at least two second intermediate transmit powers, or may be a second intermediate transmit power corresponding to a lowest path loss in the at least two second intermediate transmit powers, or may be a second intermediate transmit power corresponding to a 1st uplink transmission in the at least two second intermediate transmit powers, or may be a second intermediate transmit power corresponding to a last uplink transmission in the at least two second intermediate transmit powers. In this way, the second intermediate transmit power may be flexibly selected based on an actual situation for power reduction.

In a possible design, the power reduction value corresponding to each second intermediate transmit power may be a value for the at least two second intermediate transmit powers that is obtained by equally dividing the difference between the sum of the at least two second intermediate transmit powers and the first maximum transmit power; or the power reduction value corresponding to each second intermediate transmit power may be determined based on a ratio of each second intermediate transmit power to the sum of the at least two second intermediate transmit powers and the difference between the sum of the at least two second intermediate transmit powers and the first maximum transmit power. In this way, the power reduction value corresponding to each second intermediate transmit power may be flexibly determined based on the difference between the sum of the at least two second intermediate transmit powers and the first maximum transmit power.

In a possible design, when determining the at least two actual transmit powers based on the priorities of the at least two uplink transmissions, the terminal device may sequentially reduce the at least two second intermediate transmit powers in ascending order of the priorities of the at least two uplink transmissions, and determine at least two reduced second intermediate transmit powers as the at least two actual transmit powers, where a sum of the at least two reduced second intermediate transmit powers is less than or equal to the first maximum transmit power, and each reduced second intermediate transmit power is greater than or equal to a third power value. In this way, the second condition is met, and it can be further ensured that the actual transmit power for the uplink transmission with a higher priority is relatively higher, thereby improving transmission efficiency.

In a possible design, the priorities of the at least two uplink transmissions may be determined based on a transmission indication sequence corresponding to the at least two uplink transmissions; or the priorities of the at least two uplink transmissions may be determined based on values of the expected transmit powers corresponding to the at least two uplink transmissions; or the priorities of the at least two uplink transmissions may be determined based on values of path losses corresponding to the at least two uplink transmissions. In this way, the priorities of the at least two uplink transmissions may be flexibly determined in a plurality of manners.

In a possible design, the at least two second maximum transmit powers may be equal, and a sum of the at least two second maximum transmit powers is equal to the first maximum transmit power. Alternatively, the at least two second maximum transmit powers may meet one or more of the following conditions: The sum of the at least two second maximum transmit powers is less than or equal to a first threshold; a sum of actual radiated powers corresponding to the at least two second maximum transmit powers is less than or equal to a second threshold; a peak effective isotropic radiated power EIRP corresponding to each of the at least two second maximum transmit powers is less than or equal to a third threshold and is greater than or equal to a fourth threshold; and a sum of peak EIRPs corresponding to the at least two second maximum transmit powers is less than or equal to a fifth threshold and is greater than or equal to a sixth threshold. In this way, the second maximum transmit power corresponding to each uplink transmission may be flexibly determined in a plurality of manners.

In a possible design, the first threshold and the second threshold may be preset upper limits of transmit powers.

In a possible design, the third threshold may be a preset upper limit of a peak EIRP; or the third threshold may be the preset upper limit of the peak EIRP minus a first offset and/or plus a second offset, where the first offset is related to a quantity of uplink transmissions performed simultaneously or antenna panels for uplink transmissions performed simultaneously, and the second offset is related to power aggregation.

In a possible design, the fourth threshold may be a preset lower limit of the peak EIRP minus a third offset and a fourth offset, where the third offset is related to a quantity of uplink transmissions performed simultaneously or antenna panels for uplink transmissions performed simultaneously, and the fourth offset is determined based on a plurality of maximum power reduction indicators; or the fourth threshold may be a preset lower limit of the peak EIRP minus the third offset and the fourth offset, and then plus a fifth offset, where the fifth offset is related to the power aggregation.

The second maximum transmit power that corresponds to each uplink transmission and that meets a requirement may be determined based on the foregoing thresholds.

According to a second aspect, this application further provides a communication apparatus. The communication apparatus may be a terminal device, and the communication apparatus has a function of implementing the method in the first aspect or the possible design examples of the first aspect. The function may be implemented by hardware, or may be implemented by hardware executing corresponding software. The hardware or the software includes one or more modules corresponding to the foregoing function.

In a possible design, a structure of the communication apparatus may include a transceiver unit and a processing unit. These units may perform corresponding functions in the first aspect or the possible design examples of the first aspect. For details, refer to detailed descriptions in the method examples. Details are not described herein again.

In a possible design, a structure of the communication apparatus includes a transceiver and a processor, and optionally, further includes a memory. The transceiver is configured to receive and send data, a message, information, or the like, and communicate and interact with another device in a communication system. The processor is configured to support the communication apparatus in performing corresponding functions in the first aspect or the possible design examples of the first aspect. The memory is coupled to the processor, and stores program instructions and data that are necessary for the communication apparatus.

According to a third aspect, an embodiment of this application provides a communication system. The communication system may include the terminal device, the network device, and the like that are mentioned above.

According to a fourth aspect, an embodiment of this application provides a computer-readable storage medium. The computer-readable storage medium stores program instructions, and when the program instructions are run on a computer, the computer is enabled to perform the method according to any one of the first aspect and the possible designs of the first aspect in embodiments of this application. For example, the computer-readable storage medium may be any usable medium that can be accessed by the computer. By way of example but not limitation, the computer-readable medium may include a non-transitory computer-readable medium, a random access memory (random access memory, RAM), a read-only memory (read-only memory, ROM), an electrically erasable programmable read-only memory (electrically EPROM, EEPROM), a CD-ROM or another optical disk storage, a magnetic disk storage medium or another magnetic storage device, or any other medium that can carry or store desired program code in a form of instructions or a data structure and that can be accessed by the computer.

According to a fifth aspect, an embodiment of this application provides a computer program product including instructions. When the instructions are run on a computer, the method according to any one of the first aspect and the possible designs of the first aspect is enabled to be performed.

According to a sixth aspect, this application further provides a chip, including a processor, where the processor is coupled to a memory, and is configured to read and execute program instructions stored in the memory, so that the chip implements the method according to any one of the first aspect or the possible designs of the first aspect.

For each of the second aspect to the sixth aspect and technical effects that may be achieved in each of the aspects, refer to the descriptions of the technical effects that may be achieved in the first aspect or the possible solutions in the first aspect. Details are not described herein again.

## BRIEF DESCRIPTION OF DRAWINGS

FIG. 1 is a diagram of a type of multi-station and multi-panel transmission according to this application;
FIG. 2a shows an architecture of a communication system according to this application;
FIG. 2b shows an architecture of another communication system according to this application;
FIG. 3 is a schematic flowchart of a communication method according to this application;
FIG. 4 is a schematic flowchart of another communication method according to this application;
FIG. 5 is a schematic flowchart of another communication method according to this application;
FIG. 6 is a schematic flowchart of another communication method according to this application;
FIG. 7 is a diagram of a structure of a communication apparatus according to this application;
FIG. 8 is a diagram of a structure of another communication apparatus according to this application; and
FIG. 9 is a diagram of a structure of a communication apparatus according to this application.

## DESCRIPTION OF EMBODIMENTS

The following further describes in detail this application with reference to accompanying drawings.

Embodiments of this application provide a communication method and apparatus, so that a terminal device performs a plurality of uplink transmissions simultaneously. The method and the apparatus in this application are based on a same technical concept. Because problem-resolving principles of the method and the apparatus are similar, mutual references may be made to implementation of the apparatus and the method, and repeated parts are not described.

The following describes some terms in embodiments of this application first, to facilitate understanding of a person skilled in the art.

1. Beam

A beam is a special directional sending or receiving effect formed by a transmitter or a receiver of a network device or a terminal device by using an antenna array, which is similar to a flashlight converging light to a direction to form a beam of light. Signal sending and receiving in a form of the beam can effectively increase a signal transmission distance.

The beam may be a wide beam, a narrow beam, or another type of beam. A technology for forming the beam may be a beamforming technology or another technology. The beamforming technology may be specifically a digital beamforming technology, an analog beamforming technology, a hybrid digital/analog beamforming technology, or the like.

The beam usually corresponds to a resource. For example, during beam measurement, the network device measures different beams by using different resources, the terminal device feeds back measured resource quality, and the network device knows quality of a corresponding beam. During data transmission, beam information is also indicated by a resource corresponding to the beam information. For example, the network device indicates a TCI-state (TCI-state) by using a transmission configuration indication (transmission configuration indication, TCI) field in downlink control information (down control information, DCI), and the terminal device determines, based on a reference resource in the TCI-state, to use the reference resource to determine a beam for data.

In a communication protocol, a beam may be specifically represented as a digital beam, an analog beam, a spatial domain filter (spatial domain filter), a spatial filter (spatial filter), a spatial parameter (spatial parameter), a TCI, a TCI-state, or the like. A beam used to send a signal may be referred to as a transmission beam (transmission beam, or Tx beam), a spatial domain transmission filter (spatial domain transmission filter), a spatial transmission filter (spatial transmission filter), a spatial domain transmission parameter (spatial domain transmission parameter), a spatial transmission parameter (spatial transmission parameter), or the like. A beam used to receive a signal may be referred to as a reception beam (reception beam, or Rx beam), a spatial domain reception filter (spatial domain reception filter), a spatial reception filter (spatial reception filter), a spatial domain reception parameter (spatial domain reception parameter), a spatial reception parameter (spatial reception parameter), or the like. It should be understood that the beam in this application may be replaced with another equivalent concept, and is not limited to the foregoing mentioned concepts.

2. Antenna panel (panel)

An antenna panel may be an antenna panel of a network device, or may be an antenna panel of a terminal device. One antenna panel usually has one or more antenna array elements. The antennas are arranged into an antenna array, and beamforming is performed, to form an analog beam. The antenna array may generate analog beams pointing to different directions. In other words, each antenna panel may form an analog beam, and an analog beam that should be used by the antenna panel may be determined through beam measurement.

The terminal device may be equipped with a plurality of antenna panels. The antenna panels may be distributed at different locations, and face different directions. This can ensure that at least one antenna panel faces the network device regardless of a direction that the terminal device faces, and the terminal device can perform data transmission with the network device. The terminal device may simultaneously turn on all antenna panels for transmission. Alternatively, to reduce power consumption of the terminal device, the terminal device may use only one antenna panel for transmission at a time, and may turn off an unused antenna panel. Generally, the terminal device needs to notify the network device of whether the antenna panel of the terminal device is in an on or off state. In other words, the terminal device and the network device generally need to exchange status information of the antenna panel.

In embodiments of this application, unless otherwise specified, the antenna panel is an antenna panel of the terminal device. In a communication protocol, the antenna panel may be represented by a panel, a panel index, or the like. In addition, the antenna panel may alternatively be implicitly represented in another manner. For example, the antenna panel may alternatively be represented by an antenna port, for example, a channel state information reference signal (channel state information reference signal, CSI-RS) port, a sounding reference signal (sounding reference signal, SRS) port, a demodulation reference signal (demodulation reference signal, DMRS) port, a phase tracking reference signal (phase tracking reference signal, PTRS) port, a cell reference signal (cell reference signal, CRS) port, a time-frequency tracking reference signal (tracking reference signal, TRS) port, or a synchronization signal and physical broadcast channel block (synchronization signal and physical broadcast channel block, SSB) port. For another example, the antenna panel may alternatively be represented by an antenna port group, where the antenna port group includes at least one antenna port, and the antenna port group may include antenna ports of a same type or different types. For another example, the antenna panel may alternatively be represented by a resource, for example, a CSI-RS resource, an SRS resource, a DMRS resource, a PTRS resource, a CRS resource, a TRS resource, or an SSB resource. For another example, the antenna panel may alternatively be represented by a resource group, where the resource group includes at least one resource, and the resource group may include resources of a same type or different types. For another example, the antenna panel may alternatively be represented by a channel feature, for example, a physical uplink control channel (physical uplink control channel, PUCCH), a physical uplink shared channel (physical uplink shared channel, PUSCH), a physical random access channel (physical random access channel, PRACH), a physical downlink shared channel (physical downlink shared channel, PDSCH), a physical downlink control channel (physical downlink control channel, PDCCH), or a physical broadcast channel (physical broadcast channel, PBCH). For another example, the antenna panel may alternatively be represented by a channel group, where the channel group includes at least one channel, and the channel group includes channels of a same type or different types. For example, the channel group may be a control channel group or the like. For another example, the antenna panel may alternatively be represented by a terminal transmittability parameter group, for example, quasi-co-location (quasi-co-location, QCL), a transmission configuration indication-state (transmission configuration indication, TCI, TCI-state), or a spatial relation (spatial relation), or may be represented by an index (index) configured in the QCL, the TCI-state, or the spatial relation. Alternatively, the antenna panel may perform beamforming, the antenna panel may form a beam in a direction, and the antenna panel may be referred to as a beam. During uplink transmission, the antenna panel may be referred to as a transmission beam or the like. The antenna panel in this application may be replaced with the foregoing content.

3. Effective isotropic radiated power (effective isotropic radiated power, EIRP)

An EIRP is a product of a transmit power of a transmitter and an antenna gain in a given direction. Optionally, if both the transmit power and the antenna gain are represented in a unit of decibel (decibel, dB), the EIRP is represented as a sum of the transmit power and the antenna gain. The following uses dB as a unit for description. The EIRP may be defined as: EIRP = P + G. P represents the transmit power of the transmitter, and G represents the antenna gain of a transmit antenna. For example, when beamforming is performed by using an array antenna, the antenna gain is a beam gain corresponding to the beam. For example, it is assumed that the transmit power of the transmitter is 23 dBm, and when a beam is used for sending, the beam gain is 6 dB; and in this case, the EIRP of the transmitter is 23 + 6 = 29 dBm. Beam gains in different beam directions may be different. Therefore, EIRPs corresponding to different beam directions may also be different. An ERIP corresponding to a beam with a maximum beam gain is the maximum, and may be referred to as a peak EIRP. For example, if the maximum beam gain is 9 dB, and the transmit power of the transmitter is 23 dBm, the peak EIRP of the transmitter is 23 + 9 = 32 dBm.

It should be noted that dBm is a logarithmic power unit, and is obtained through logarithmic conversion of a linear power unit (for example, watt W or milliwatt mW), for example, X mW = 10 * log10(X) dBm. For example, $P_0$ = 1000 mW is equivalent to $P_0$ = 30 dBm. dB is obtained through logarithmic conversion of a linear multiple unit. Specifically, Y times = 10 * log10(Y) dB. For example, $P_{RB}$ = 100 is equivalent to $P_{RB}$ = 20 dB. For example, it is assumed that $P_0$ = 10 mW ($P_0$ is a target receive power corresponding to a single RB), and a total of 100 RBs are used during a current uplink transmission. In this case, a target receive power corresponding to the 100 RBs is 10 mW * 100, and is 10 dBm + 20 dB = 30 dBm if units of dB and dBm are used for representation.

4. A maximum transmit power refers to a maximum transmit power that can be used by the terminal device.

5. Expected transmit power

A transmit power calculated by a terminal device based on a power control parameter and a transmission scheduling status is referred to as an expected transmit power. In other words, the terminal device expects to use the power for sending. However, if the expected transmit power is greater than a maximum transmit power, the terminal cannot use the expected transmit power, but can use only the maximum transmit power for sending.

6. An actual transmit power is an actual transmit power that is finally determined by a terminal device based on a power control mechanism and that is used by the terminal device. Unless otherwise specified, a transmit power refers broadly to the actual transmit power.

7. Uplink transmission power control (uplink transmit power control)

During uplink transmission, a terminal device needs to determine a transmit power that should be used. The transmit power cannot be excessively high. If the transmit power is excessively high, strong interference is caused to a neighboring cell. The transmit power cannot be excessively low either. If the transmit power is excessively low, a signal received by a network device is excessively weak. A transmit power P (unit: dBm) of the terminal device may be calculated according to the following formula 1:

$$P = \begin{cases} Pcmax, & \text{if } P' > Pcmax \\ P', & \text{if } P' \leq Pcmax \end{cases} \qquad \text{Formula 1}$$

Pcmax is a maximum transmit power that can be used by the terminal device, and P' is an expected transmit power calculated by the terminal device based on a power control parameter and a current transmission scheduling status (for example, a quantity of frequency domain resources). When P' does not exceed Pcmax, P' is used as an actual transmit power. When P' exceeds Pcmax, Pcmax is used as an actual transmit power. Pcmax and P' determining methods may be specifically as follows:

Pcmax determining method:

First, some concepts related to the Pcmax determining method are described as follows:

Ptmax: Ptmax is a total power that is actually radiated from the terminal device when the terminal device performs transmission by using Pcmax. In other words, Pcmax is a maximum transmit power that is theoretically transmitted by the terminal device, and Ptmax is a maximum power that is actually radiated. Pcmax and Ptmax may be different. For example, because an energy loss is incurred when a signal passes through some components, the total power Ptmax that is actually radiated is less than Pcmax.

TRPmax: a maximum value that is of the total power radiated from the terminal device and that is specified in a protocol.

Pumax: Pumax is an EIPR (referred to as a peak EIRP) in a direction of a strongest beam when the terminal device uses Pcmax for actual transmission.

EIRPmax: an upper limit of the peak EIRP specified in the protocol. The EIRP is a radiated power of the terminal device in a specified direction (for example, a specified beam direction). In an ideal status, the EIRP is equal to a transmit power plus an antenna gain (for example, a beam gain of a beam).

EIRPmin: a lower limit of the peak EIRP specified in the protocol.

Specifically, Pcmax is a value determined, by the terminal device according to a protocol specification, from a value range that meets a specific condition. For example, Pcmax determined by the terminal device needs to meet the following Condition 1 and Condition 2. In other words, the terminal device selects, from the value range of Pcmax that meets the following conditions, a proper value as final Pcmax. Pcmax selection is an implementation behavior of a terminal device vendor, and Pcmax selected by different terminal devices may be different.

Condition 1: Ptmax ≤ TRPmax. In other words, Pcmax selected by the terminal device cannot cause total energy actually radiated to exceed TRPmax.

Condition 2: EIRPmin - MPR ≤ Pumax ≤ EIRPmax. In other words, Pcmax selected by the terminal device cannot cause the peak EIRP to exceed the upper limit of the peak EIRP, and cannot cause the peak EIRP to be lower than a lower limit of the EIRP. The lower limit of the EIRP is represented as the lower limit of the peak EIRP minus a quantity related to a maximum power reduction indicator, that is, a maximum power reduction (maximum power reduction, MPR) indicator specified in the protocol. The lower limit of the peak EIRP is a fixed value specified in the protocol.

During actual transmission, a high peak-to-average value of a signal may affect transmission efficiency, and therefore a transmit power has to be reduced. This phenomenon is power reduction. Power reduction of the terminal device is related to a plurality of factors, for example, related to a used waveform (signal peak-to-average ratios of different waveforms are different), and related to unit signal radiation intensity restricted by a regulation. Considering that the power reduction may exist in the terminal device, the power reduction needs to be considered in the lower limit of the EIRP, in other words, the lower limit is set to $EIRP_{min}$ - MPR ($EIRP_{min}$ is not directly used). MPR is a maximum power reduction, and is related to factors such as a waveform, a modulation scheme, frequency domain resource allocation, a regulation constraint of a maximum allowable radiation quantity, and testing tolerance. Actually, MPR is a complex expression. For ease of description, a variable MPR is uniformly used for representation herein.

P' determining method:

P' (unit: dBm) is a transmit power that is expected to be used and that is calculated by the terminal device, and is referred to as an expected transmit power for short. A specific calculation method may be shown in the following formula 2:

$$P' = P_0 + P_{RB} + a*PL + P_{MCS} + P_{TPC} \qquad \text{Formula 2}$$

$P_0$ is a target receive power of each resource block (resource block, RB), and is indicated by the network device to the terminal device. In other words, the network device needs to indicate, to the terminal device, the receive power that is on a single RB and that is expected by the network device.

$P_{RB}$ is an offset determined based on a number of RBs (number of RBs, NRB), and $P_0 + P_{RB}$ represents a target receive power of NRB RBs.

PL is a loss of a signal from the terminal device to the network device, and is referred to as a path loss. PL is measured by the terminal device based on a path loss measurement resource configured by the network device.

a is a path loss compensation coefficient. a*PL represents the path loss that needs to be compensated for. a = 1 indicates that an entire path loss needs to be compensated for, and a < 1 indicates that a partial path loss needs to be compensated for. A value of a is indicated by the network device to the terminal device.

$P_{MCS}$ is an offset related to a modulation and coding scheme (modulation and coding scheme, MCS). Whether to use the offset is configurable, to be specific, whether the terminal device uses the offset to calculate P' is indicated by the network device to the terminal device.

$P_{TPC}$ is a power adjustment value indicated by closed-loop power control signaling sent by the network device to the terminal device.

8. Multi-station/multi-panel transmission

A network device may perform transmission with a terminal device based on one or more stations (the transmission herein may refer broadly to transmission from a station to the terminal device, or transmission from the terminal device to a station). Transmission based on a single station is referred to as single-station transmission, and transmission based on a plurality of stations is referred to as multi-station transmission. In addition, the terminal device may perform transmission with the network device based on one or more antenna panels (briefly referred to as panels below). Transmission based on a single panel is referred to as single-panel transmission, and transmission based on a plurality of panels is referred to as multi-panel transmission.

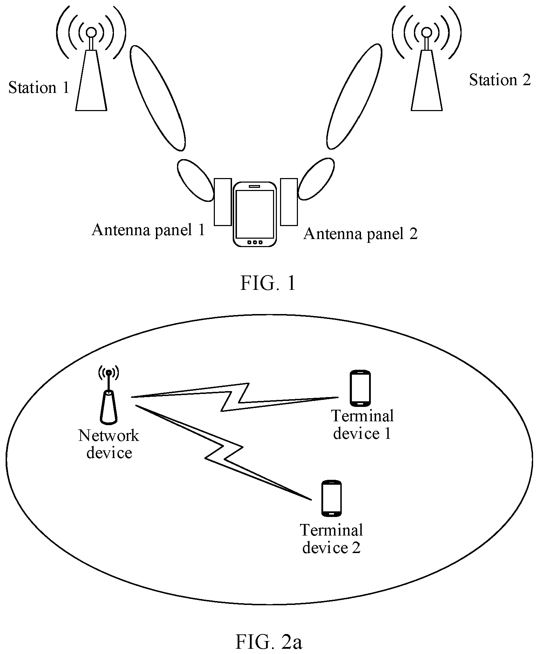

For example, FIG. 1 is a diagram of a type of multi-station and multi-panel transmission. The terminal device includes an antenna panel 1 and an antenna panel 2. The terminal device communicates with a station 1 by using the antenna panel 1, and communicates with a station 2 by using the antenna panel 2.

9. In the descriptions of this application, words such as "first" and "second" are merely used for distinguishing between descriptions, and shall not be understood as an indication or implication of relative importance or an indication or implication of an order.

In the descriptions of this application, "at least one (type)" means one or more (types), and "a plurality of (types)" means two or more (types). "At least one of the following" or a similar expression thereof means any combination of these items, including any combination of single items or plural items. For example, at least one of a, b, or c may represent a; b; c; a and b; a and c; b and c; or a, b, and c, where a, b, and c may be singular or plural.

In the descriptions of this application, "and/or" describes an association relationship between associated objects, and represents that three relationships may exist. For example, A and/or B may represent the following cases: Only A exists, both A and B exist, and only B exists, where A and B may be singular or plural. "/" represents "or". For example, a/b represents a or b.

To describe the technical solutions in embodiments of this application more clearly, the following describes the communication method and the apparatus provided in embodiments of this application in detail with reference to the accompanying drawings.

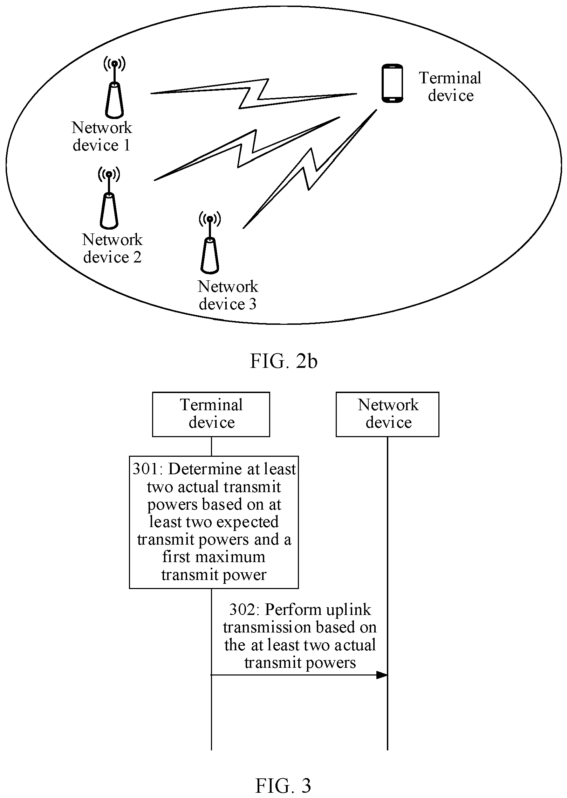

A communication system to which embodiments of this application are applicable may include one or more network devices and one or more terminal devices. For example, FIG. 2a shows an architecture of a communication system. A structure of the communication system includes one network device and one or more terminal devices. FIG. 2a shows two terminal devices (for example, a terminal device 1 and a terminal device 2 in FIG. 2a). In FIG. 2a, one network device may perform transmission with one terminal device, or perform transmission with a plurality of terminal devices. For another example, FIG. 2b shows an architecture of another communication system. A structure of the communication system includes a plurality of network devices and one terminal device. FIG. 2b shows three network devices (for example, a network device 1, a network device 2, and a network device 3 in FIG. 2b). In FIG. 2b, the plurality of network devices may simultaneously perform transmission with one terminal device.

The network device may be a device having a wireless transceiver function, or a chip or a chip system that may be disposed in the network device. The network device includes but is not limited to: a base station (evolutional NodeB, eNB or eNodeB), a base station (generation NodeB, gNB), a macro base station, a micro base station (also referred to as a small cell), a radio network controller (radio network controller, RNC), a NodeB (NodeB, NB), a base station controller (base station controller, BSC), and a base transceiver station (base transceiver station, BTS), a home base station (for example, a home evolved NodeB, or home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission and reception point, TRP, or transmission point, TP), a radio controller in a cloud radio access network (cloud radio access network, CRAN) scenario, a network node that forms a gNB or a transmission point, for example, a baseband unit (BBU) or a distributed unit (distributed unit, DU), or the like.

In some deployments, the gNB may include a central unit (centralized unit, CU) and a DU. The gNB may further include a radio unit (radio unit, RU). The CU implements some functions of the gNB, and the DU implements some functions of the gNB. For example, the CU implements functions of a radio resource control (radio resource control, RRC) layer and a packet data convergence protocol (packet data convergence protocol, PDCP) layer, and the DU implements functions of a radio link control (radio link control, RLC) layer, a media access control (media access control, MAC) layer, and a physical (physical, PHY) layer. Information at the RRC layer eventually becomes information at the PHY layer, or is converted from the information at the PHY layer. Therefore, in this architecture, higher layer signaling such as RRC layer signaling or PHCP layer signaling may also be considered as being sent by the DU or sent by the DU and the RU. It may be understood that the network device may be a CU node, a DU node, or a device including a CU node and a DU node. In addition, the CU may be classified as a network device in an access network RAN, or the CU may be classified as a network device in a core network CN. This is not limited.

The terminal device may also be referred to as user equipment (user equipment, UE), an access terminal, a subscriber unit (subscriber unit), a subscriber station, a mobile station (mobile station, MS), a remote station, a remote terminal, a mobile device, a user terminal, a terminal, a wireless communication device, a user agent, or a user apparatus. The terminal device in embodiments of this application may be a mobile phone (mobile phone), a cellular phone (cellular phone), a smartphone (smartphone), a wireless data card, a personal digital assistant (personal digital assistant, PDA) computer, a tablet computer (Pad), a computer having a wireless transceiver function, a wireless modem (modem), a handheld device (handset), a laptop computer (laptop computer), a machine-type communication (machine-type communication, MTC) terminal, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a smart wearable device (smart glasses, smart watch, smart headset, or the like), a wireless terminal in a smart home (smart home), or the like, or may be a chip, a chip module (or a chip system), or the like that can be disposed in the foregoing device. An application scenario is not limited in embodiments of this application. A terminal device with a wireless transceiver function and a chip or a chip system that may be disposed in the terminal device are collectively referred to as the terminal device in this application.

It should be noted that, the communication systems shown in FIG. 2a and FIG. 2b may be but are not limited to 4th generation (4th Generation, 4G) systems and 5th generation (5th Generation, 5G) systems, such as a new radio access technology (new radio access technology, NR). Optionally, the method in embodiments of this application is further applicable to various communication systems in the future, such as a 6th generation (6th Generation, 6G) system or another communication network.

It should be noted that a quantity and types of devices shown in the communication system shown in FIG. 2a and FIG. 2b are merely examples. There may be more devices in the communication system, for example, a core network device, which is not shown in FIG. 2a and FIG. 2b.

When the network device uses the plurality of stations, and/or the terminal device uses the plurality of panels, signal propagation paths that uplink transmissions corresponding to the plurality of stations or panels go through may be different, and therefore corresponding path losses may also be different. Consequently, transmit powers needed for uplink transmissions corresponding to different stations or panels may also be different. Therefore, the terminal device needs to determine one transmit power for each station or panel. Currently, the terminal device can perform transmission by using the plurality of stations or panels only in a time division manner. For example, in two different slots, the transmission is performed by using two stations or panels respectively. In this way, at one moment, the terminal device can calculate only a transmit power used by a single station or panel for uplink transmission. According to the current method, the terminal device cannot implement simultaneous transmission based on a plurality of stations or panels. Based on this, an embodiment of this application provides a communication method, to implement the simultaneous transmission based on the plurality of stations/panels.

Based on the foregoing descriptions, an embodiment of this application provides a communication method. Refer to FIG. 3. A specific procedure of the method may include the following steps.

Step 301: A terminal device determines at least two actual transmit powers based on at least two expected transmit powers and a first maximum transmit power, where the at least two expected transmit powers are in one-to-one correspondence with at least two uplink transmissions simultaneously performed by the terminal device, the first maximum transmit power is a maximum transmit power of the terminal device, and the at least two actual transmit powers are in one-to-one correspondence with the at least two uplink transmissions.

For example, the at least two uplink transmissions simultaneously performed by the terminal device may be uplink transmissions simultaneously performed by the terminal device by using at least two antenna panels, or may be uplink transmissions simultaneously performed by the terminal device with at least two stations, or may be uplink transmissions corresponding to at least two beams, or may be uplink transmissions corresponding to at least two SRS resource indicators (SRS resource indicators, SRIs), or may be uplink transmissions corresponding to at least two TCIs, or may be uplink transmissions corresponding to at least two transmission precoding matrix indicators (transmission precoding matrix indicator, TPMI) fields, or may be uplink transmissions corresponding to at least two transmission occasions (transmission occasions), or may be uplink transmissions that are scheduled by a PDCCH and that correspond to at least two control resource sets (control resource sets, CORESET) associated with different control resource pool indexes (CORESETPoolIndex). This is not limited in this application.

Before the terminal device determines the at least two actual transmit powers, a network device configures a power control parameter (namely, a power control parameter) for the terminal device, and the terminal device determines the at least two expected transmit powers based on the power control parameter.

Optionally, the network device may send radio resource control (radio resource control, RRC) configuration signaling to the terminal device. The RRC configuration signaling may include a power control-related parameter, and is used to configure the power control parameter for the terminal device. For example, the RRC configuration signaling may be used to configure, for the terminal device, one group of power control parameters corresponding to one or more uplink transmissions (for example, one station or one antenna panel), or one or more groups of power control parameters corresponding to a plurality of uplink transmissions (for example, a plurality of stations or a plurality of antenna panels). Any group of power control parameters may include one or more of the following:

$P_0$: a target receive power of each RB.

Path loss (path loss, PL) measurement resource: A path loss measurement resource is used by the terminal device to measure a path loss value PL of signal transmission. The network device sends the path loss measurement resource to the terminal device, and the terminal device measures the path loss measurement resource, to determine a signal energy loss, that is, PL, of a signal from the network device to the terminal device (or from the terminal device to the network device).

a: a path loss compensation coefficient. A value of a ranges from 0 to 1, indicating a proportion of a path loss for which an uplink transmit power needs to be compensated.

Closed-loop power control identifier (Close loop index): This application does not relate to specific details of a closed-loop power control identifier, and details are not described again.

In an optional implementation, the terminal device may determine, based on a group of power control parameters corresponding to each uplink transmission, an expected transmit power corresponding to the uplink transmission, and then determine the at least two actual transmit powers. Specifically, the terminal device may determine, according to the method in Formula 2, the expected transmit power corresponding to each uplink transmission.

For example, two uplink transmissions are used as an example for description. When the terminal device determines, by using Formula 2, an expected transmit power $P_1'$ corresponding to a 1st uplink transmission, $P_0$, a, and PL are power control parameters corresponding to the 1st uplink transmission, $P_{RB}$ and $P_{MCS}$ are uplink transmission scheduling parameters corresponding to the 1st uplink transmission, and $P_{TPC}$ is an uplink transmission closed-loop power control adjustment value corresponding to the 1st uplink transmission. An expected transmit power $P_2'$ corresponding to a 2nd uplink transmission is similar, and details are not described again. The expected transmit power may be calculated in units of dB and dBm. A unit of $P_0$ may be dBm, and units of $P_{RB}$, PL, $P_{MCS}$, and $PT_{PC}$ may be dB. In the following example descriptions, two uplink transmissions are used as an example for description.

In an optional implementation, the terminal device determines the at least two actual transmit powers based on the at least two expected transmit powers and the first maximum transmit power. The method may be as follows: The terminal device compares a sum of the at least two expected transmit powers with the first maximum transmit power, and then determines the at least two actual transmit powers based on a comparison result. For example, two uplink transmissions are still used as an example. A sum of expected transmit powers corresponding to the two uplink transmissions is $P_1' + P_2'$, and then a result of $P_1' + P_2'$ is compared with a first maximum transmit power Pcmax.

That the terminal device determines the at least two actual transmit powers based on the comparison result may include the following two cases:

Case a1: When the comparison result is that the sum of the at least two expected transmit powers is less than or equal to the first maximum transmit power, the terminal device determines that the at least two actual transmit powers are the at least two expected transmit powers.

For example, if $P_1' + P_2' \le \text{Pcmax}$, an actual transmit power P1 corresponding to the 1st uplink transmission is equal to $P_1'$, and an actual transmit power P2 corresponding to the 2nd uplink transmission is equal to P2.

Case a2: When the comparison result is that the sum of the at least two expected transmit powers is greater than the first maximum transmit power, the terminal device may determine the at least two actual transmit powers by using the following two methods:

Method b 1: The terminal device reduces powers of a part or all of the at least two expected transmit powers, to obtain the at least two actual transmit powers.

Method b2: The terminal device determines the at least two actual transmit powers based on priorities of the at least two uplink transmissions.

In Method b1, when the sum of the at least two expected transmit powers is greater than the first maximum transmit power, the expected transmit power cannot be directly used as the actual transmit power, but a power less than the expected transmit power needs to be used as the actual transmit power, to ensure that a sum of actual transmit powers corresponding to all uplink transmissions needs to be less than or equal to Pcmax. In other words, an actual transmit power corresponding to each uplink transmission is obtained by performing power reduction on the expected transmit power (that is, reducing the expected transmit power). Specifically, that the terminal device reduces the powers of the part or all of the at least two expected transmit powers, to obtain the at least two actual transmit powers may include the following two manners:

Manner c1: The terminal device reduces a first expected transmit power by a first value, and determines that the at least two actual transmit powers are a reduced first expected transmit power and an expected transmit power other than the first expected transmit power in the at least two expected transmit powers, where the first expected transmit power is one of the at least two expected transmit powers, and the first value is a value greater than or equal to a difference between the sum of the at least two expected transmit powers and the first maximum transmit power. The first value may be understood as a power reduction value, a power back-off value, or the like.

In Manner c1, the power reduction is performed only on one of the expected transmit powers. To be specific, an actual transmit power corresponding to one uplink transmission is lower than a corresponding expected transmit power (in other words, the first expected transmit power is reduced by the first value), and an actual transmit power for another uplink transmission is equal to a corresponding expected transmit power. For example, $P1 = P_1'$, and $P2 = P_2' - \Delta P$. $\Delta P$ is the first value. Optionally, $\Delta P$ may be specifically equal to $P_1' + P_2' - \text{Pcmax}$, so that P1 + P2 = Pcmax, or $\Delta P$ may alternatively be greater than $P_1' + P_2' - \text{Pcmax}$, so that P1 + P2 < Pcmax.

In an optional implementation, the first expected transmit power may be a largest expected transmit power in the at least two expected transmit powers. For example, if $P_1' < P_2'$, $P1 = P_1'$, and $P2 = P_2' - \Delta P$. In this way, the at least two actual transmit powers do not differ greatly.

In another optional implementation, the first expected transmit power may be an expected transmit power corresponding to a lowest path loss in the at least two expected transmit powers. For example, when a path loss corresponding to $P_2'$ is less than a path loss corresponding to $P_1'$, $P1 = P_1'$, and $P2 = P_2' - \Delta P$. In this way, the power reduction may occur on a power corresponding to an uplink transmission with high channel quality, thereby avoiding a large difference between received signal quality corresponding to two uplink transmissions.

In another optional implementation, the first expected transmit power may be an expected transmit power corresponding to a 1st uplink transmission in the at least two expected transmit powers. In this implementation, the expected transmit power corresponding to the 1st uplink transmission may be used by default. For example, $P1 = P_1' - \Delta P$, and $P2 = P_2'$. The expected transmit power corresponding to the 1st uplink transmission may be specifically: an expected transmit power corresponding to a 1st station, or an expected transmit power corresponding to a 1st antenna panel, or an expected transmit power corresponding to a 1st beam, or an expected transmit power corresponding to a 1st SRI, a 1st TCI, or a 1st TPMI field, or an expected transmit power corresponding to a 1st transmission occasion, or an expected transmit power for an uplink transmission that is scheduled by a PDCCH and that corresponds to CORESET whose CORESET group number is 0.

In another optional implementation, the first expected transmit power may be an expected transmit power corresponding to a last uplink transmission in the at least two expected transmit powers. In this implementation, the expected transmit power corresponding to the last uplink transmission may be used by default. For example, $P1 = P_1'$, and $P2 = P_2' - \Delta P$. The expected transmit power corresponding to the last uplink transmission may be specifically: an expected transmit power corresponding to a last station, or an expected transmit power corresponding to a last antenna panel, or an expected transmit power corresponding to a last beam, or an expected transmit power corresponding to a last SRI, a last TCI, or a last TPMI field, or an expected transmit power corresponding to a last transmission occasion, or an expected transmit power for an uplink transmission that is scheduled by a PDCCH and that corresponds to CORESET whose CORESET group number is n, where n is an integer greater than or equal to 1.

In an optional example, in Manner c1, the first expected transmit power is reduced to as low as 0. In a possible case, if the first expected transmit power subject to the power reduction is less than the foregoing $\Delta P$, after the first expected transmit power is reduced to 0, a sum of expected transmit powers corresponding to all uplink transmissions is still greater than Pcmax. In this case, the terminal device may further perform the power reduction on another expected transmit power until the sum of the expected transmit powers for all uplink transmissions is not greater than Pcmax. Optionally, when performing the power reduction on the another expected transmit power, the terminal device may still use the foregoing method for reducing one of the expected transmit powers. Details are not described herein again.

In another optional example, in Manner c1, the first expected transmit power is reduced to as low as a threshold $P_{thr}$. In a possible case, if the first expected transmit power subject to the power reduction is reduced to $P_{thr}$, a sum of expected transmit powers corresponding to all uplink transmissions is still greater than Pcmax. In this case, the terminal device may further perform the power reduction on another expected transmit power until the sum of the expected transmit powers for all uplink transmissions is not greater than Pcmax. Optionally, when performing the power reduction on the another expected transmit power, the terminal device may still use the foregoing method for reducing one of the expected transmit powers. Details are not described herein again.

Manner c2: The terminal device reduces each of the at least two expected transmit powers by a corresponding power reduction value, to obtain the at least two actual transmit powers, where the power reduction value corresponding to each expected transmit power is determined based on a difference between the sum of the at least two expected transmit powers and the first maximum transmit power.

In an example of Manner c2, the power reduction value corresponding to each expected transmit power may be a value for the at least two expected transmit powers that is obtained by equally dividing the difference between the sum of the at least two expected transmit powers and the first maximum transmit power. In this example, the terminal device performs equal reduction on all expected transmit powers, in other words, power reduction values corresponding to all expected transmit powers are equal, for example, are all equal to $\Delta P$. $\Delta P$ may be equal to half of the difference between the sum of the at least two expected transmit powers and the first maximum transmit power, for example,

$$\Delta P = (P_1' + P_2' - Pcmax)/2.$$

In another example of Manner c2, the power reduction value corresponding to each expected transmit power may be determined based on a ratio of each expected transmit power to the sum of the at least two expected transmit powers and the difference between the sum of the at least two expected transmit powers and the first maximum transmit power. In this example, the terminal device performs reduction on each expected transmit power proportionally, in other words, the power reduction value corresponding to each expected transmit power is determined based on the ratio of each expected transmit power. For example, $P_1' : P_2' = 1 : 2$. In this case, a ratio of power reduction values corresponding to the two expected transmit powers is $\Delta P_1 : \Delta P_2 = 1 : 2$. Therefore, $\Delta P_1 = (P_1' + P_2' - \text{Pcmax})/3$ and $\Delta P_2 = 2(P_1' + P_2' - \text{Pcmax})/3$ may be obtained.

In the foregoing Method b2, the terminal device determines the at least two actual transmit powers based on the priorities of the at least two uplink transmissions. The method may be as follows: The terminal device may sequentially reduce the at least two expected transmit powers in ascending order of the priorities of the at least two uplink transmissions, and determine at least two reduced expected transmit powers as the at least two actual transmit powers, where a sum of the at least two reduced expected transmit powers is less than or equal to the first maximum transmit power, and each reduced expected transmit power is greater than or equal to a first power value. Optionally, the first power value may be greater than or equal to 0.

Specifically, the terminal device sequentially allocates a power to each uplink transmission in ascending order of the priorities of the uplink transmissions, in other words, performs power reduction on the expected transmit power corresponding to each uplink transmission. Starting from an uplink transmission with a lowest priority, when the terminal device reduces an expected transmit power corresponding to the uplink transmission, the expected transmit power corresponding to the uplink transmission is reduced to as low as the first power value. When a sum of expected transmit powers after the reduction is greater than the first maximum transmit power, the terminal device continues to reduce an expected transmit power corresponding to a next uplink transmission, until a sum of all expected transmit powers after the reduction is less than or equal to the first maximum transmit power. It should be noted that, after expected transmit powers for the first several uplink transmissions with low priorities are reduced, when a total sum of reduced expected transmit powers and an expected transmit power corresponding to the remaining uplink transmission is less than or equal to the first maximum transmit power, the terminal device may not reduce the expected transmit power corresponding to the remaining uplink transmission, but use the expected transmit power corresponding to the remaining uplink transmission as an actual transmit power corresponding to the remaining uplink transmission.

For example, in the foregoing Method b2, the priorities of the at least two uplink transmissions may be determined by using the following three methods:

Method d1: The priorities of the at least two uplink transmissions may be determined based on a transmission indication sequence corresponding to the at least two uplink transmissions.

Optionally, the priorities of the at least two uplink transmissions may sequentially descend based on a first-to-last transmission indication sequence corresponding to the at least two uplink transmissions. For example, a 1st uplink transmission has a highest priority, a 2nd uplink transmission has a second highest priority, and so on. In an implementation, the network device may indicate, by using one piece of DCI, the terminal device to perform a plurality of uplink transmissions. The DCI may include one or more of the following: a plurality of SRI fields, a plurality of TCI fields, or a plurality of TPMI fields, and one of the foregoing fields corresponds to one uplink transmission. Therefore, the 1st uplink transmission may be specifically an uplink transmission corresponding to a 1st SRI field, a 1st TCI field, or a 1st TPMI field in the DCI, the 2nd uplink transmission may be specifically an uplink transmission corresponding to a 2nd SRI field, a 2nd TCI field, or a 2nd TPMI field in the DCI, and so on. In another implementation, the network device may alternatively separately indicate each uplink transmission by using a plurality of pieces of DCI. Therefore, the 1st uplink transmission may be specifically an uplink transmission indicated by 1st DCI, the 2nd uplink transmission may be specifically an uplink transmission indicated by 2nd DCI, and so on. The 1st DCI and the 2nd DCI may be distinguished between by using corresponding control channel group identifiers. For example, DCI corresponding to a control channel group identifier CORESETPoolIndex=0 is the 1st DCI, DCI corresponding to a control channel group identifier CORESETPoolIndex=1 is the 2nd DCI, and so on.

Alternatively, optionally, the priorities of the at least two uplink transmissions may sequentially ascend based on a first-to-last transmission indication sequence corresponding to the at least two uplink transmissions. Specific descriptions are opposite to the foregoing descriptions, and details are not described herein again.

Method d2: The priorities of the at least two uplink transmissions are determined based on values of the expected transmit powers corresponding to the at least two uplink transmissions.

Optionally, the priorities of the at least two uplink transmissions may sequentially descend based on a lowest-to-highest sequence of the expected transmit powers corresponding to the at least two uplink transmissions. For example, an uplink transmission with a lowest expected transmit power corresponds to a highest priority, an uplink transmission with a second lowest expected transmit power corresponds to a second highest priority, and so on.

Alternatively, optionally, the priorities of the at least two uplink transmissions may sequentially descend based on a highest-to-lowest sequence of expected transmit powers corresponding to the at least two uplink transmissions.

Method d3: The priorities of the at least two uplink transmissions are determined based on values of path losses corresponding to the at least two uplink transmissions.

Optionally, the priorities of the at least two uplink transmissions may sequentially descend based on a lowest-to-highest sequence of the path losses corresponding to the at least two uplink transmissions. For example, an uplink transmission corresponding to a lowest path loss corresponds to a highest priority, an uplink transmission with a second lowest path loss corresponds to a second highest priority, and so on.

Alternatively, optionally, the priorities of the at least two uplink transmissions may sequentially descend based on a highest-to-lowest sequence of the path losses corresponding to the at least two uplink transmissions.

Step 302: The terminal device performs uplink transmission based on the at least two actual transmit powers. To be specific, the terminal device simultaneously transmits information, data, or the like to the network device by using the at least two actual transmit powers.

For example, when the terminal device may perform the uplink transmission simultaneously by using a transmitter corresponding to a plurality of antenna panels, the network device performs receiving by using a receiver. One antenna panel may be considered as one transmitter, or the plurality of antenna panels may be considered as one transmitter. This is not limited in this application.

According to the foregoing communication method, the terminal device may determine the actual transmit powers for the plurality of uplink transmissions performed simultaneously, to implement simultaneous performance of the plurality of uplink transmissions (for example, implement the simultaneous performance of the uplink transmissions by using a plurality of stations or antenna panels), thereby improving an uplink throughput.

In an embodiment, based on the embodiment shown in FIG. 3, under a specific condition, the terminal device may alternatively roll back from the simultaneous performance of the plurality of uplink transmissions (for example, multi-station/multi-panel transmission) to performance of a single uplink transmission (for example, single-station/single-panel transmission). For example, when an expected transmit power corresponding to an uplink transmission becomes very low after power reduction, the simultaneous performance of the plurality of uplink transmissions is not as good as the performance of the single uplink transmission. In this case, the terminal device may roll back to the performance of the single uplink transmission, and notify the network device of information that the terminal device rolls back to the performance of the single uplink transmission. The following briefly describes a rollback condition and a rollback action in a process in which the terminal device uses a specific rollback action to roll back from the simultaneous performance of the plurality of uplink transmissions to the performance of the single uplink transmission under a specific rollback condition.

In an optional implementation, the rollback condition may include one or more of the following conditions:

(1) Before the actual transmit powers are determined in the embodiment shown in FIG. 3, an expected transmit power corresponding to at least one uplink transmission is greater than a first threshold. For example, the first threshold may be Pcmax.

(2) Before the actual transmit powers are determined in the embodiment shown in FIG. 3, the expected transmit power corresponding to each of all uplink transmissions is greater than a second threshold. For example, the second threshold may be Pcmax.

(3) Before the actual transmit powers are determined in the embodiment shown in FIG. 3, the sum of the expected transmit powers corresponding to all uplink transmissions exceeds a third threshold. For example, the third threshold may be Pcmax.

(4) Before the actual transmit powers are determined in the embodiment shown in FIG. 3, a difference between or a ratio of the expected transmit powers corresponding to the at least two uplink transmissions is greater than a fourth threshold.

(5) After the actual transmit powers are determined in the embodiment shown in FIG. 3, at least one actual transmit power is lower than a fifth threshold.

(6) After the actual transmit powers are determined in the embodiment shown in FIG. 3, each of all actual transmit powers is lower than a sixth threshold.

(7) After the actual transmit powers are determined in the embodiment shown in FIG. 3, a difference between or a ratio of the at least two actual transmit powers is greater than a seventh threshold.

(8) In a process of determining the actual transmit powers in the embodiment shown in FIG. 3, a power reduction value corresponding to the expected transmit power corresponding to the at least one uplink transmission is greater than an eighth threshold.

(9) In a process of determining the actual transmit powers in the embodiment shown in FIG. 3, a power reduction value corresponding to the expected transmit power corresponding to each of all uplink transmissions is greater than a ninth threshold.

(10) At least two uplink transmissions are respectively scheduled by using different downlink control information.

(11) After the expected transmit powers are reduced based on the priorities of the uplink transmissions, a reduced expected transmit power corresponding only to one uplink transmission is greater than a tenth threshold, where the tenth threshold may be 0, to be specific, a transmit power is allocated only to one uplink transmission, and an actual transmit power corresponding to another uplink transmission is 0.

It should be understood that, in addition to the foregoing conditions, the rollback condition may further include another condition, and the foregoing condition is further combined with the another condition as the rollback condition.

It should be noted that the fourth threshold to the tenth threshold may be preset values.

In an optional implementation, the rollback action may include at least one or more of the following:

(1) A single uplink transmission is used. Specifically, a method for determining a specific uplink transmission to be used may be as follows: An uplink transmission (a station/panel) with a largest expected transmit power is used; or an uplink transmission with a lowest expected transmit power is used; or an uplink transmission corresponding to a lowest path loss is used; or an uplink transmission with a largest quantity of corresponding frequency domain resources is used; or an uplink transmission with a highest corresponding modulation and coding order is used; or an uplink transmission bearing a largest amount of uplink data is used; or a 1st uplink transmission is used. Optionally, the 1st uplink transmission may be specifically an uplink transmission corresponding to a 1st SRI field, a 1st uplink precoding indication field, or a 1st code division multiplexing (code division multiplexing, CDM) port group in downlink control information; or may be an uplink transmission corresponding to downlink control information belonging to a 1st downlink control channel group, for example, an uplink transmission corresponding to downlink control information indicated by a control channel corresponding to CORESETPoonIndex 0.

(2) A transmit power is recalculated based on the single uplink transmission (for example, single-station/single-panel transmission). To be specific, an expected transmit power corresponding to the uplink transmission is compared with Pcmax. If the expected transmit power is not greater than Pcmax, the expected transmit power is directly used as an actual transmit power for the uplink transmission. If the expected transmit power is greater than Pcmax, Pcmax is used as an actual transmit power for the uplink transmission.

(3) Reporting of a power headroom (power headroom, PHR) is triggered. The terminal device may send the PHR and current uplink data together to the network device.

Based on the foregoing rollback condition, the terminal device may roll back from the simultaneous performance of the plurality of uplink transmissions to the performance of the single uplink transmission by using the foregoing rollback action.

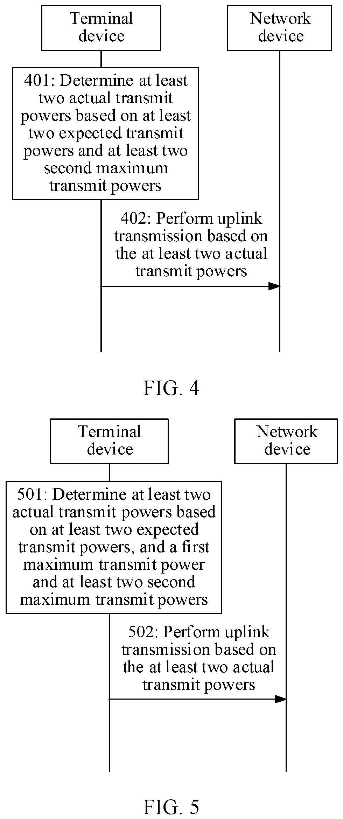

Based on the foregoing descriptions, an embodiment of this application further provides another communication method. Refer to FIG. 4. A specific procedure of the method may include the following steps.

Step 401: A terminal device determines at least two actual transmit powers based on at least two expected transmit powers and at least two second maximum transmit powers, where the at least two expected transmit powers are in one-to-one correspondence with at least two uplink transmissions simultaneously performed by the terminal device, the at least two second maximum transmit powers are in one-to-one correspondence with the at least two uplink transmissions, and the at least two actual transmit powers are in one-to-one correspondence with the at least two uplink transmissions.

Specifically, for an understanding of the at least two uplink transmissions simultaneously performed by the terminal device, refer to related descriptions in step 301 in the embodiment shown in FIG. 3. Details are not described herein again.

Similarly, before the terminal device determines the at least two actual transmit powers, a network device configures a power control parameter (namely, a power control parameter) for the terminal device, and the terminal device determines the at least two expected transmit powers based on the power control parameter. Specifically, for an explanation of configuring the power control parameter for the terminal device by the network device and an explanation of the power control parameter, refer to related descriptions in step 301 in the embodiment shown in FIG. 3. Details are not described herein again.

Similarly, the terminal device may determine, based on a group of power control parameters corresponding to each uplink transmission, an expected transmit power corresponding to the uplink transmission. For a specific method for determining the expected transmit power, refer to related descriptions in step 301 in the embodiment shown in FIG. 3. Details are not described herein again.

In an optional implementation, the second maximum transmit powers corresponding to the at least two uplink transmissions may be determined by using the following methods:

Method e1: The at least two second maximum transmit powers are equal, and a sum of the at least two second maximum transmit powers is equal to a first maximum transmit power.

The first maximum transmit power is a maximum transmit power of the terminal device, and an example in which the first maximum transmit power is Pcmax is used for illustration.

In Method e1, the first maximum transmit power is equally divided, to obtain at least two equal second maximum transmit powers. For example, two uplink transmissions are used as an example for description (in the following examples of this embodiment, two uplink transmissions are used as an example for description, and details are not described again below), and second maximum transmit powers Pcmax1 and Pcmax2 corresponding to the two uplink transmissions each may be equal to Pcmax/2.

In this embodiment of this application, units of Pcmax1, Pcmax2, and Pcmax/2 are linear power units, for example, watt (W) or milliwatt (mW). This is also applicable to other related parts, and details are not described again.

Method e2: The at least two second maximum transmit powers may be determined by the terminal device from a value range that meets a specific condition. Specifically, the at least two second maximum transmit powers may meet one or more of the following conditions:

Condition 1: A sum of the at least two second maximum transmit powers is less than or equal to a first threshold. The first threshold is a preset upper limit of the transmit power.

For example, $Pcmax1 + Pcmax2 \leq TRPmax$. In other words, the sum of the second maximum transmit powers for the two uplink transmissions does not exceed TRPmax. TRPmax is an upper limit of a total transmit power (that is, a maximum value of the total transmit power) specified in a protocol, and is an example of the first threshold. A unit of TRPmax is a linear power unit.

Condition 2: A sum of actual radiated powers corresponding to the at least two second maximum transmit powers is less than or equal to a second threshold. The second threshold is a preset upper limit of the transmit power.

For example, $Ptmax1 + Ptmax2 \leq TRPmax$. Ptmax1 and Ptmax2 are respectively a total power actually radiated when an uplink signal is sent by using Pcmax1 for one uplink transmission and a total power actually radiated when an uplink signal is sent by using Pcmax2 for the other uplink transmission. In other words, a sum of the total powers actually radiated for the two uplink transmissions does not exceed TRPmax. TRPmax is an upper limit of a total transmit power (that is, a maximum value of the total transmit power) specified in a protocol, and is an example of the second threshold. Units of Ptmax1, Ptmax2, and TRPmax are linear power units.

For another example, $Ptmax \leq TRPmax$. Ptmax is a total power actually radiated when uplink signals are sent by using Pcmax1 and Pcmax2 respectively for the two uplink transmissions. In other words, a sum of the total powers actually radiated for the two uplink transmissions does not exceed TRPmax. TRPmax is an upper limit of a total transmit power (that is, a maximum value of the total transmit power) specified in a protocol, and is an example of the second threshold. Units of Ptmax and TRPmax are linear power units.

Condition 3: A peak EIRP corresponding to each of the at least two second maximum transmit powers is less than or equal to a third threshold and is greater than or equal to a fourth threshold.

For example, the third threshold may be a preset or protocol-specified upper limit of the peak EIRP (that is, a maximum value of the peak EIRP), for example, EIRPmax; or the third threshold may be a preset or protocol-specified upper limit of the peak EIRP minus a first offset (for example, $\Delta panel$) and/or plus a second offset (for example, $\Delta P_{IBE}$), where the first offset is related to a quantity of uplink transmissions performed simultaneously or antenna panels for uplink transmissions performed simultaneously, and the second offset may be related to power aggregation.

For example, when the quantity of uplink transmissions performed simultaneously is 2, the first offset is 3 dB (dividing by 2 is equivalent to subtracting 3 dB).

For example, the fourth threshold may be a preset lower limit of the peak EIRP (that is, a minimum value of the peak EIRP, for example, EIRPmin) minus a third offset (for example, $\Delta panel$) and a fourth offset (for example, MPR). The third offset is related to the quantity of uplink transmissions performed simultaneously or the antenna panels for the uplink transmissions performed simultaneously. For example, when a single antenna panel is used for transmission, the third offset does not exist, or a value of the third offset is 0. The third offset exists, or a value of the third offset is not equal to 0, only when a plurality of antenna panels are used for simultaneous transmission. The value of the third offset is related to a corresponding antenna panel, for example, related to a quantity of antenna ports of the antenna panel, a power amplifier parameter, and the like. The value of the third offset may also be related to a quantity of antenna panels used for simultaneous transmission. For example, when two antenna panels are used for simultaneous transmission, the third offset is equal to 3 dB. The fourth offset may be determined based on a plurality of maximum power reduction indicators; or the fourth threshold may be the lower limit of the preset peak EIRP minus the third offset and the fourth offset, and then plus a fifth offset (for example, $\Delta P_{IBE}$), where the fifth offset is related to the power aggregation.

Optionally, that the fourth offset is determined based on the plurality of maximum power reduction indicators may be as follows: The fourth offset may be obtained through calculation by using a maximum power reduction indicator MPR, an additional maximum power reduction (additional maximum power reduction, A-MPR) indicator, a power association maximum power reduction (power management maximum power reduction, P-MPR) indicator, and the like that are specified in the protocol.

Optionally, the fourth offset may be calculated by using the following formula:

$$\text{MAX}(\text{MAX}(\text{MPR}_{f,c}, \text{A-MPR}_{f,c},) + \Delta\text{MB}_{P,n}, \text{P-MPR}_{f,c}) - \text{MAX}\{\text{T}(\text{MAX}(\text{MPR}_{f,c}, \text{A-MPR}_{f,c},)), \text{T}(\text{P-}$$
$$\text{MPR}_{f,c})\}.$$

$\text{MPR}_{f,c}$ is MPR corresponding to a carrier f of a cell c, $\text{A-MPR}_{f,c}$ is A-MPR corresponding to the carrier f of the cell c, $\text{P-MPR}_{f,c}$ is P-MPR corresponding to the carrier f of the cell c, $\Delta\text{MB}_{P,n}$ is a relaxation quantity of the peak EIRP, and T(x) is a formula and represents tolerance to x. Specifically, English descriptions of the foregoing parameters may be as follows:

$\text{MPR}_{f,c}$: maximum output power reduction for the carrier f of the serving cell c;
$\text{A-MPR}_{f,c}$: additional maximum power reduction for the carrier f of the serving cell c;
$\text{P-MPR}_{f,c}$: power management UE maximum power reduction for the carrier f of the serving cell c;
$\Delta\text{MB}_{P,n}$: allowed relaxation to each, minimum peak EIRP and reference sensitivity due to support for multi-band operation, per band in a combination of supported bands; and
$\text{T}(\Delta P)$: the tolerance $\text{T}(\Delta P)$ for applicable values of $\Delta P$ (values in dB).

For example, peak EIRPs corresponding to the second maximum transmit powers for the two uplink transmissions are respectively Pumax1 and Pumax2. Pumax1 and Pumax2 may respectively meet the following conditions:

$$\text{EIRPmin} + \Delta P_{\text{IBE}} - \text{MPR} - \Delta panel1 \leq \text{Pumax1} \leq \text{EIRPmax};$$

and

$$\text{EIRPmin} + \Delta P_{\text{IBE}} - \text{MPR} - \Delta panel2 \leq \text{Pumax2} \leq \text{EIRPmax}$$

Pumax1 and Pumax2 respectively represent a peak EIRP corresponding to Pcmax1 for one uplink transmission of the terminal and a peak EIRP corresponding to Pcmax2 for the other uplink transmission of the terminal. EIRPmin and EIRPmax respectively represent the lower limit of the peak EIRP and the upper limit of the peak EIRP that are specified in the protocol. $\Delta P_{\text{IBE}}$ represents a quantity related to the power aggregation. MPR represents a maximum power reduction indicator. $\Delta panel1$ and $\Delta panel2$ are numerical values related to the quantity of uplink transmissions performed simultaneously or the antenna panels for the uplink transmissions performed simultaneously, and the values of the two may be the same or different. For example, $\Delta panel1$, $\Delta panel2$, and the like may be separately determined based on specifications of the two antenna panels. In this example, a peak EIRP corresponding to each of the two uplink transmissions is greater than or equal to the lower limit of the peak EIRP, where the lower limit of the peak EIRP is equal to the protocol-specified minimum value of the peak EIRP plus the quantity $\Delta P_{\text{IBE}}$ related to the power aggregation, and then minus the maximum power reduction indicator MPR and the offset $\Delta panel$ related to the quantity of uplink transmissions performed simultaneously or the antenna panels for the uplink transmissions performed simultaneously, and is less than or equal to the upper limit of the peak EIRP.

In the foregoing example, in the constraints on Pumax1 and Pumax2, a numerical value $\Delta panel$ is further subtracted from the left side (that is, the minimum value EIRPmin of the peak EIRP) of each of the above inequalities, where the numerical value is related to the quantity of uplink transmissions performed simultaneously or the antenna panels for the uplink transmissions performed simultaneously. A reason for subtracting the numerical value $\Delta panel$ from the left side of the inequality includes: When the terminal device uses two antenna panels for transmission, both the two antenna panels can obtain only a partial power. Therefore, a numerical value needs to be subtracted from the lower limit. If the numerical value is not subtracted from the lower limit, the terminal cannot select Pcmax1 and Pcmax2 that meet a condition because the lower limit is set to an excessively high value. In the foregoing example, each parameter is in a logarithmic unit dBm or dB.

Optionally, the inequalities in the foregoing example may be extended, for example, one or more numerical values may be further added to or subtracted from the upper limit of the peak EIRP or the lower limit of the peak EIRP. For example, Pumax1 corresponding to an uplink transmission 1 is used as an example for description.

$\text{EIRPmin} + \Delta P_{\text{IBE}} - \text{MPR} - \Delta panel1 \leq \text{Pumax1} \leq \text{EIRPmax}$ may further be replaced with:
$\text{EIRPmin} + \Delta P_{\text{IBE}} - \text{MPR} \leq \text{Pumax1} \leq \text{EIRPmax} - \Delta panel1$; or may further be replaced with:
$\text{EIRPmin} + \Delta P_{\text{IBE}} - \text{MPR} - \Delta panel1 \leq \text{Pumax1} \leq \text{EIRPmax} - \Delta panel1$, or the like.

It may be understood that similar extension may also be performed on Pumax2 corresponding to an uplink transmission 2, and details are not described herein again.

Optionally, Condition 3 may be further described as follows:

$$P_{Powerclass} + \Delta P_{IBE} - MAX(MAX(MPR_{f,c}, A\text{-}MPR_{f,c},) + \Delta MB_{P,n}, P\text{-}MPR_{f,c}) - MAX\{T(MAX(MPR_{f,c}, A\text{-}MPR_{f,c},)), T(P\text{-}MPR_{f,c})\} - \Delta panel1 \leq P_{UMAX,f,c,1} \leq EIRPmax; and$$

$$P_{Powerclass} + \Delta P_{IBE} - MAX(MAX(MPR_{f,c}, A\text{-}MPR_{f,c},) + \Delta MB_{P,n}, P\text{-}MPR_{f,c}) - MAX\{T(MAX(MPR_{f,c}, A\text{-}MPR_{f,c},)), T(P\text{-}MPR_{f,c})\} - \Delta panel2 \leq P_{UMAX,f,c,2} \leq EIRPmax.$$

Alternatively, Condition 3 may be described as follows:

$$P_{Powerclass} + \Delta P_{IBE} - MAX(MAX(MPR_{f,c}, A\text{-}MPR_{f,c},) + \Delta MB_{P,n}, P\text{-}MPR_{f,c}) - MAX\{T(MAX(MPR_{f,c}, A\text{-}MPR_{f,c},)), T(P\text{-}MPR_{f,c})\} \leq P_{UMAX,f,c,1} \leq EIRPmax - \Delta panel1;$$

and

$$P_{Powerclass} + \Delta P_{IBE} - MAX(MAX(MPR_{f,c}, A\text{-}MPR_{f,c},) + \Delta MB_{P,n}, P\text{-}MPR_{f,c}) - MAX\{T(MAX(MPR_{f,c}, A\text{-}MPR_{f,c},)), T(P\text{-}MPR_{f,c})\} \leq P_{UMAX,f,c,2} \leq EIRPmax - \Delta panel2.$$

Alternatively, Condition 3 may be described as follows:

$$P_{Powerclass} + \Delta P_{IBE} - MAX(MAX(MPR_{f,c}, A\text{-}MPR_{f,c},) + \Delta MB_{P,n}, P\text{-}MPR_{f,c}) - MAX\{T(MAX(MPR_{f,c}, A\text{-}MPR_{f,c},)), T(P\text{-}MPR_{f,c})\} - \Delta panel\ 1 \leq P_{UMAX,f,c,1} \leq EIRPmax - \Delta panel1;$$

and

$$P_{Powerclass} + \Delta P_{IBE} - MAX(MAX(MPR_{f,c}, A\text{-}MPR_{f,c},) + \Delta MB_{P,n}, P\text{-}MPR_{f,c}) - MAX\{T(MAX(MPR_{f,c}, A\text{-}MPR_{f,c},)), T(P\text{-}MPR_{f,c})\} - \Delta panel\ 2 \leq P_{UMAX,f,c,2} \leq EIRPmax - \Delta panel2.$$

$P_{Powerclass}$ represents the lower limit of the peak EIRP.

Condition 4: A sum of peak EIRPs corresponding to the at least two second maximum transmit powers is less than or equal to a fifth threshold and is greater than or equal to a sixth threshold.

Optionally, the fifth threshold and the sixth threshold may be preset values specified in the protocol. For example, the fifth threshold and the sixth threshold may also be determined by reusing the method for determining the third threshold and the fourth threshold.

Based on the foregoing method, after determining the at least two second maximum transmit powers and the at least two expected transmit powers, the terminal device determines the at least two actual transmit powers based on the at least two expected transmit powers and the at least two second maximum transmit powers. The method may be as follows: The terminal device determines a corresponding actual transmit power based on a value relationship between each expected transmit power and a second maximum transmit power corresponding to each expected transmit power.

Specifically, if an expected transmit power corresponding to one uplink transmission is less than or equal to a corresponding second maximum transmit power, the expected transmit power is used as an actual transmit power corresponding to the uplink transmission. If an expected transmit power corresponding to one uplink transmission is greater than a corresponding second maximum transmit power, the second maximum transmit power is used as an actual transmit power corresponding to the uplink transmission. For example, actual transmit powers P1 and P2 corresponding to the two uplink transmissions may be determined by using the following formulas:

$$P1 = \begin{cases} Pcmax1, & if\ P_1' > Pcmax1 \\ P_1', & if\ P_1' \leq Pcmax1 \end{cases};$$

$$P2 = \begin{cases} Pcmax2, & \text{if } P_2' > Pcmax2 \\ P_2', & \text{if } P_2' \le Pcmax2 \end{cases}$$

Step 402: The terminal device performs uplink transmission based on the at least two actual transmit powers. To be specific, the terminal device simultaneously transmits information, data, or the like to the network device by using the at least two actual transmit powers.

For example, when the terminal device may perform the uplink transmission simultaneously by using a transmitter corresponding to a plurality of antenna panels, the network device performs receiving by using a receiver. One antenna panel may be considered as one transmitter, or the plurality of antenna panels may be considered as one transmitter. This is not limited in this application.

According to the foregoing communication method, the terminal device may determine the actual transmit powers for the plurality of uplink transmissions performed simultaneously, to implement simultaneous performance of the plurality of uplink transmissions (for example, implement the simultaneous performance of the uplink transmissions by using a plurality of stations or antenna panels), thereby improving an uplink throughput.

In an embodiment, based on the embodiment shown in FIG. 4, under a specific condition, the terminal device may alternatively roll back from the simultaneous performance of the plurality of uplink transmissions (for example, multi-station/multi-panel transmission) to performance of a single uplink transmission (for example, single-station/single-panel transmission). For example, when an actual transmit power corresponding to an uplink transmission is very low, the simultaneous performance of the plurality of uplink transmissions is not as good as the performance of the single uplink transmission. In this case, the terminal device may roll back to the performance of the single uplink transmission, and notify the network device of information that the terminal device rolls back to the performance of the single uplink transmission. The following briefly describes a rollback condition and a rollback action in a process in which the terminal device uses a specific rollback action to roll back from the simultaneous performance of the plurality of uplink transmissions to the performance of the single uplink transmission under a specific rollback condition.

In an optional implementation, the rollback condition may include one or more of the following conditions:

(1) At least one expected transmit power is greater than an eleventh threshold, where the eleventh threshold may be a second maximum transmit power corresponding to the expected transmit power.

(2) Each of all expected transmit powers is greater than a twelfth threshold, where the twelfth threshold may be a second maximum transmit power corresponding to each expected transmit power.

(3) A sum of all expected transmit powers exceeds a thirteenth threshold, where the thirteenth threshold may be the first maximum transmit power Pcmax.

(4) A difference between or a ratio of at least two expected transmit powers is greater than a fourteenth threshold, where the fourteenth threshold may be a preset value.

(5) At least two uplink transmissions are respectively scheduled by using different downlink control information.

It should be understood that, in addition to the foregoing conditions, the rollback condition may further include another condition, and the foregoing condition is further combined with the another condition as the rollback condition.

In an optional implementation, the rollback action is similar to the related rollback action that is in the embodiment shown in FIG. 3 and that is about rollback to the performance of the single uplink transmission, and mutual reference may be made. Details are not described herein again.

Based on the foregoing descriptions, an embodiment of this application further provides another communication method. Refer to FIG. 5. A specific procedure of the method may include the following steps.

Step 501: A terminal device determines at least two actual transmit powers based on at least two expected transmit powers, and a first maximum transmit power and at least two second maximum transmit powers, where the at least two expected transmit powers are in one-to-one correspondence with at least two uplink transmissions simultaneously performed by the terminal device, the first maximum transmit power is a maximum transmit power of the terminal device, the at least two second maximum transmit powers are in one-to-one correspondence with the at least two uplink transmissions, and the at least two actual transmit powers are in one-to-one correspondence with the at least two uplink transmissions.

Specifically, for an understanding of the at least two uplink transmissions simultaneously performed by the terminal device, refer to related descriptions in step 301 in the embodiment shown in FIG. 3. Details are not described herein again.

Similarly, before the terminal device determines the at least two actual transmit powers, a network device configures a power control parameter (namely, a power control parameter) for the terminal device, and the terminal device determines the at least two expected transmit powers based on the power control parameter. Specifically, for an explanation of configuring the power control parameter for the terminal device by the network device and an explanation of the power control parameter, refer to related descriptions in step 301 in the embodiment shown in FIG. 3. Details are not described herein again.

Similarly, the terminal device may determine, based on a group of power control parameters corresponding to each uplink transmission, an expected transmit power corresponding to the uplink transmission. For a specific method for determining the expected transmit power, refer to related descriptions in step 301 in the embodiment shown in FIG. 3. Details are not described herein again.

For example, for the at least two second maximum transmit powers, refer to the explanations of the at least two second maximum transmit powers in step 401 in the embodiment shown in FIG. 4. Details are not described herein again.

After determining the at least two second maximum transmit powers and the at least two expected transmit powers, the terminal device determines the at least two actual transmit powers based on the at least two expected transmit powers, and the first maximum transmit power and the at least two second maximum transmit powers. The method may be as follows: The terminal device determines the at least two actual transmit powers based on the at least two expected transmit powers, and the first maximum transmit power and the at least two second maximum transmit powers and based on a first condition and a second condition, where the first condition may include: An actual transmit power corresponding to each uplink transmission is less than or equal to a second maximum transmit power corresponding to each uplink transmission; and the second condition may include: A sum of the at least two actual transmit powers is less than or equal to the first maximum transmit power. Specifically, the foregoing process may be implemented by using the following two methods:

Method f1: The terminal device first compares a sum of the at least two expected transmit powers with the first maximum transmit power based on the second condition, and determines at least two first intermediate transmit powers based on a comparison result, where the at least two first intermediate transmit powers are in one-to-one correspondence with the at least two expected transmit powers; and then determines a corresponding actual transmit power based on a value relationship between a first intermediate transmit power corresponding to each expected transmit power and a second maximum transmit power corresponding to each expected transmit power and based on the first condition.

That the terminal device determines the at least two first intermediate transmit powers based on the comparison result may include the following two cases:

Case g1: When the comparison result is that the sum of the at least two expected transmit powers is less than or equal to the first maximum transmit power, the terminal device determines that the at least two first intermediate transmit powers are the at least two expected transmit powers.

For example, two uplink transmissions are still used as an example. A sum of expected transmit powers corresponding to the two uplink transmissions is $P_1' + P_2'$, and then a result of $P_1' + P_2'$ is compared with a first maximum transmit power Pcmax. If $P_1' + P_2' \leq \text{Pcmax}$, a first intermediate transmit power P1-1 corresponding to a 1st uplink transmission is equal to $P_1'$, and a first intermediate transmit power P2-1 corresponding to a 2nd uplink transmission is equal to P2.

Case g2: When the comparison result is that the sum of the at least two expected transmit powers is greater than the first maximum transmit power, the terminal device may determine the at least two first intermediate transmit powers by using the following two methods:

Method h1: The terminal device reduces powers of a part or all of the at least two expected transmit powers, to obtain the at least two first intermediate transmit powers.

Method h2: The terminal device determines the at least two first intermediate transmit powers based on priorities of the at least two uplink transmissions.

In the foregoing Method h1, when the sum of the at least two expected transmit powers is greater than the first maximum transmit power, to meet the second condition, the expected transmit power cannot be directly used as the first intermediate transmit power, but a power less than the expected transmit power needs to be used as the first intermediate transmit power, to ensure that the second condition is met. In other words, a first intermediate transmit power corresponding to each uplink transmission is obtained by performing power reduction on the expected transmit power (that is, reducing the expected transmit power). Specifically, that the terminal device reduces the powers of the part or all of the at least two expected transmit powers, to obtain the at least two first intermediate transmit powers may include the following two manners:

Manner i 1: The terminal device reduces a first expected transmit power by a first value, and determines that the at least two first intermediate transmit powers are a reduced first expected transmit power and an expected transmit power other than the first expected transmit power in the at least two expected transmit powers, where the first expected transmit power is one of the at least two expected transmit powers, and the first value is a value greater than or equal to a difference between the sum of the at least two expected transmit powers and the first maximum transmit power.

In Manner i1, the power reduction is performed only on one of the expected transmit powers. To be specific, a first intermediate transmit power corresponding to one uplink transmission is lower than a corresponding expected transmit power (in other words, the first expected transmit power is reduced by the first value), and a first intermediate transmit power for another uplink transmission is equal to a corresponding expected transmit power. For example, $P1\text{-}1 = P_1'$, and $P2\text{-}1 = P_2' - \Delta P$. $\Delta P$ is the first value. Optionally, $\Delta P$ may be specifically equal to $P_1' + P_2' - Pcmax$, so that P1-1 + P2-1 = Pcmax, or $\Delta P$ may alternatively be greater than $P_1' + P_2' - Pcmax$, so that P1-1 + P2-1 < Pcmax.

For specific descriptions of the first expected transmit power in Manner i1, refer to related descriptions of the first expected transmit power in Manner c1 in the embodiment shown in FIG. 3. Details are not described herein again. It should be understood that the obtained actual transmit power described in the embodiment shown in FIG. 3 is replaced with the first intermediate transmit power in this embodiment.

Manner i2: The terminal device reduces each of the at least two expected transmit powers by a corresponding power reduction value, to obtain the at least two first intermediate transmit powers, where the power reduction value corresponding to each expected transmit power is determined based on a difference between the sum of the at least two expected transmit powers and the first maximum transmit power.

Specifically, in Manner i2, the power reduction value corresponding to each expected transmit power is similar to the power reduction value corresponding to each expected transmit power in Manner c2 in the embodiment shown in FIG. 3, and mutual reference may be made. Details are not described herein again. It should be understood that the obtained actual transmit power described in the embodiment shown in FIG. 3 is replaced with the first intermediate transmit power in this embodiment.

In the foregoing Method h2, the terminal device determines the at least two first intermediate transmit powers based on the priorities of the at least two uplink transmissions. The method may be as follows: The terminal device sequentially reduces the at least two expected transmit powers in ascending order of the priorities of the at least two uplink transmissions, and determines at least two reduced expected transmit powers as the at least two first intermediate transmit powers, where a sum of the at least two reduced expected transmit powers is less than or equal to the first maximum transmit power, and each reduced expected transmit power is greater than or equal to a second power value. Optionally, the first power value may be greater than or equal to 0.

Specifically, the terminal device sequentially allocates a power to each uplink transmission in ascending order of the priorities of the uplink transmissions, in other words, performs power reduction on the expected transmit power corresponding to each uplink transmission. Starting from an uplink transmission with a lowest priority, when the terminal device reduces an expected transmit power corresponding to the uplink transmission, the expected transmit power corresponding to the uplink transmission is reduced to as low as the second power value. When a sum of the expected transmit powers after the reduction is greater than the first maximum transmit power, the terminal device continues to reduce an expected transmit power corresponding to a next uplink transmission, until a sum of all the expected transmit powers after the reduction is less than or equal to the first maximum transmit power. It should be noted that, after expected transmit powers for the first several uplink transmissions with low priorities are reduced, when a total sum of the reduced expected transmit powers and an expected transmit power corresponding to the remaining uplink transmission is less than or equal to the first maximum transmit power, the terminal device may not reduce the expected transmit power corresponding to the remaining uplink transmission, but use the expected transmit power corresponding to the remaining uplink transmission as a first intermediate transmit power corresponding to the remaining uplink transmission.

For example, in Method h2, a method for determining the priorities of the at least two uplink transmissions is similar to the method for determining the priorities of the at least two uplink transmissions in Method b2 in the embodiment shown in FIG. 3, and mutual reference may be made. Details are not described herein again.

Method f2: The terminal device first determines a corresponding second intermediate transmit power based on a value relationship between each expected transmit power and a second maximum transmit power corresponding to each expected transmit power and based on the first condition, to obtain at least two second intermediate transmit powers; and then the terminal device compares a sum of the at least two second intermediate transmit powers with the first maximum transmit power based on the second condition, and determines the at least two actual transmit powers based on a comparison result.

When determining the corresponding second intermediate transmit power based on the value relationship between each expected transmit power and the second maximum transmit power corresponding to each expected transmit power, if an expected transmit power corresponding to one uplink transmission is less than or equal to the corresponding second maximum transmit power, the terminal device uses the expected transmit power as the second intermediate transmit power corresponding to the uplink transmission; or if an expected transmit power corresponding to one uplink transmission is greater than the corresponding second maximum transmit power, the terminal device uses the second maximum transmit power as the second intermediate transmit power corresponding to the uplink transmission.

In Method f2, that the terminal device determines the at least two actual transmit powers based on the comparison result may include the following two cases:

Case j 1: When the comparison result is that the sum of the at least two second intermediate transmit powers is less than or equal to the first maximum transmit power, the terminal device determines that the at least two actual transmit powers are the at least two second intermediate transmit powers.

For example, two uplink transmissions are still used as an example. A sum of second intermediate transmit powers corresponding to the two uplink transmissions is P1-2 + P2-2, and then a result of P1-2 + P2-2 is compared with a first maximum transmit power Pcmax. If P1- 2 + P2- 2 $\leq$ Pcmax, an actual transmit power P1 corresponding to a 1st uplink transmission is equal to P1-2, and an actual transmit power P2 corresponding to a 2nd uplink transmission is equal to P2-1.

Case j2: When the comparison result is that the sum of the at least two second intermediate transmit powers is greater than the first maximum transmit power, the terminal device may determine the at least two actual transmit powers by using the following two methods:

Method k1: The terminal device reduces powers of a part or all of the at least two second intermediate transmit powers, to obtain the at least two actual transmit powers.

Method k2: The terminal device determines the at least two actual transmit powers based on priorities of the at least two uplink transmissions.

In Method k1, when the sum of the at least two second intermediate transmit powers is greater than the first maximum transmit power, the second intermediate transmit power cannot be directly used as the actual transmit power, but a power less than the second intermediate transmit power needs to be used as the actual transmit power, to ensure that the second condition is met. In other words, an actual transmit power corresponding to each uplink transmission is obtained by performing power reduction on the second intermediate transmit power (that is, reducing the second intermediate transmit power). Specifically, that the terminal device reduces the powers of the part or all of the at least two second intermediate transmit powers, to obtain the at least two actual transmit powers may include the following two manners:

Manner l1: The terminal device reduces a second intermediate transmit power by a second value, and determines that the at least two actual transmit powers are a reduced second intermediate transmit power and a second intermediate transmit power other than the second intermediate transmit power in the at least two second intermediate transmit powers, where the second intermediate transmit power is one of the at least two second intermediate transmit powers, and the second value is a value greater than or equal to a difference between the sum of the at least two second intermediate transmit powers and the first maximum transmit power.

In Manner 11, the power reduction is performed only on one of the second intermediate transmit powers. To be specific, an actual transmit power corresponding to one uplink transmission is lower than a corresponding second intermediate transmit power (in other words, the second intermediate transmit power is reduced by the second value), and an actual transmit power for another uplink transmission is equal to a corresponding second intermediate transmit power. For example, P1 = P1-2, and P2 = P2 - 2 - $\Delta$P'. $\Delta$P' is the second value. Optionally, $\Delta$P' may be specifically equal to P1-2 + P2-2 - Pcmax, so that P1 + P2 = Pcmax, or $\Delta$P' may alternatively be greater than P1-2 + P2-2 - Pcmax, so that P1 + P2 < Pcmax.

In an optional implementation, the second intermediate transmit power may be a largest second intermediate transmit power in the at least two second intermediate transmit powers. For example, if P1-2 < P2-2, P1 = P1-2, and P2 = P2-2 -$\Delta$P'. In this way, the at least two actual transmit powers do not differ greatly.

In another optional implementation, the second intermediate transmit power may be a second intermediate transmit power corresponding to a lowest path loss in the at least two second intermediate transmit powers. For example, when a path loss corresponding to P2-2 is less than a path loss corresponding to P1-2, P1 = P1-2, and P2 = P2-2 -$\Delta$P'. In this way, the power reduction may occur on a power corresponding to an uplink transmission with high channel quality, thereby avoiding a large difference between received signal quality corresponding to two uplink transmissions.

In another optional implementation, the first expected transmit power may be a second intermediate transmit power corresponding to a 1st uplink transmission in the at least two second intermediate transmit powers. In this implementation, the second intermediate transmit power corresponding to the 1st uplink transmission may be used by default. For example, P1 = P1-1 -$\Delta$P', and P2 = P2-2. The second intermediate transmit power corresponding to the 1st uplink transmission may be specifically: a second intermediate transmit power corresponding to a 1st station, or a second intermediate transmit power corresponding to a 1st antenna panel, or a second intermediate transmit power corresponding to a 1st beam, or a second intermediate transmit power corresponding to a 1st SRI, a 1st TCI, or a 1st TPMI field, or a second intermediate transmit power corresponding to a 1st transmission occasion, or a second intermediate transmit power for an uplink transmission that is scheduled by a PDCCH and that corresponds to CORESET whose CORESET group number is 0.

In another optional implementation, the first expected transmit power may be a second intermediate transmit power corresponding to a last uplink transmission in the at least two second intermediate transmit powers. In this implementation, the second intermediate transmit power corresponding to the last uplink transmission may be used by default. For example, P1 = P1-2, and P2 = P2-2 - ΔP'. The second intermediate transmit power corresponding to the last uplink transmission may be specifically: a second intermediate transmit power corresponding to a last station, or a second intermediate transmit power corresponding to a last antenna panel, or a second intermediate transmit power corresponding to a last beam, or a second intermediate transmit power corresponding to a last SRI, a last TCI, or a last TPMI field, or a second intermediate transmit power corresponding to a last transmission occasion, or a second intermediate transmit power for an uplink transmission that is scheduled by a PDCCH and that corresponds to CORESET whose CORESET group number is n, where n is an integer greater than or equal to 1.

In an optional example, in Manner 11, the second intermediate transmit power is reduced to as low as 0. In a possible case, if the second intermediate transmit power subject to the power reduction is less than the foregoing ΔP', after the second intermediate transmit power is reduced to 0, a sum of second intermediate transmit powers corresponding to all uplink transmissions is still greater than Pcmax. In this case, the terminal device may further perform the power reduction on another second intermediate transmit power until the sum of the second intermediate transmit powers for all uplink transmissions is not greater than Pcmax. Optionally, when performing the power reduction on the another second intermediate transmit power, the terminal device may still use the foregoing method for reducing one of the second intermediate transmit powers. Details are not described herein again.

In another optional example, in Manner 11, the second intermediate transmit power is reduced to as low as a threshold $P_{thr}$. In a possible case, if the second intermediate transmit power subject to the power reduction is reduced to $P_{thr}$, a sum of all second intermediate transmit powers is still greater than Pcmax. In this case, the terminal device may further perform the power reduction on another second intermediate transmit power until the sum of the second intermediate transmit powers for all uplink transmissions is not greater than Pcmax. Optionally, when performing the power reduction on the another second intermediate transmit power, the terminal device may still use the foregoing method for reducing one of the second intermediate transmit powers. Details are not described herein again.

Manner l2: The terminal device reduces each of the at least two second intermediate transmit powers by a corresponding power reduction value, to obtain the at least two actual transmit powers, where the power reduction value corresponding to each second intermediate transmit power is determined based on a difference between the sum of the at least two second intermediate transmit powers and the first maximum transmit power.

In an example of Manner 12, the power reduction value corresponding to each second intermediate transmit power may be a value for the at least two second intermediate transmit powers that is obtained by equally dividing the difference between the sum of the at least two second intermediate transmit powers and the first maximum transmit power. In this example, the terminal device performs equal reduction on all second intermediate transmit powers, in other words, power reduction values corresponding to all second intermediate transmit powers are equal, for example, are all equal to ΔP'. ΔP' may be equal to half of the difference between the sum of the at least two second intermediate transmit powers and the first maximum transmit power, for example, ΔP' = (P1 - 2 + P2 - 2 - Pcmax)/2.

In another example of Manner 12, the power reduction value of each second intermediate transmit power may be determined based on a ratio of each second intermediate transmit power to the sum of the at least two second intermediate transmit powers and the difference between the sum of the at least two second intermediate transmit powers and the first maximum transmit power. In this example, the terminal device performs reduction on each second intermediate transmit power proportionally, in other words, the power reduction value corresponding to each second intermediate transmit power is determined based on the ratio of each second intermediate transmit power. For example, P1-2:P2-2 = 1: 2. In this case, a ratio of power reduction values corresponding to the two second intermediate transmit powers is $\Delta P_1':\Delta P_2'$ = 1: 2 . Therefore, ΔP/ = (P1 - 2 + P2 - 2 - Pcmax)/3 and $\Delta P_2'$ = 2(P1 - 2 + P2 - 2 - Pcmax)/3 may be obtained.

In the foregoing Method k2, the terminal device determines the at least two actual transmit powers based on the priorities of the at least two uplink transmissions. The method may be as follows: The terminal device sequentially reduces the at least two second intermediate transmit powers in ascending order of the priorities of the at least two uplink transmissions, and determines at least two reduced second intermediate transmit powers as the at least two actual transmit powers, where a sum of the at least two reduced second intermediate transmit powers is less than or equal to the first maximum transmit power, and each reduced second intermediate transmit power is greater than or equal to a third power value. Optionally, the third power value may be greater than or equal to 0.

Specifically, the terminal device sequentially allocates a power to each uplink transmission in ascending order of the priorities of the uplink transmissions, in other words, performs power reduction on the second intermediate transmit power corresponding to each uplink transmission. Starting from an uplink transmission with a lowest priority, when the terminal device reduces a second intermediate transmit power corresponding to the uplink transmission, the second intermediate transmit power corresponding to the uplink transmission is reduced to as low as the second power value. When a sum of the second intermediate transmit powers after the reduction is greater than the first maximum transmit power, the terminal device continues to reduce a second intermediate transmit power corresponding to a next uplink transmission, until a sum of all the second intermediate transmit powers after the reduction is less than or equal to the first maximum transmit power. It should be noted that, after second intermediate transmit powers for the first several uplink transmissions with low priorities are reduced, when a total sum of the reduced second intermediate transmit powers and a second intermediate transmit power corresponding to the remaining uplink transmission is less than or equal to the first maximum transmit power, the terminal device may not reduce the second intermediate transmit power corresponding to the remaining uplink transmission, but use the second intermediate transmit power corresponding to the remaining uplink transmission as an actual transmit power corresponding to the remaining uplink transmission.

For example, in Method k2, a method for determining the priorities of the at least two uplink transmissions is similar to the method for determining the priorities of the at least two uplink transmissions in Method b2 in the embodiment shown in FIG. 3, and mutual reference may be made. Details are not described herein again.

Step 502: The terminal device performs uplink transmission based on the at least two actual transmit powers. To be specific, the terminal device simultaneously transmits information, data, or the like to the network device by using the at least two actual transmit powers.

For example, when the terminal device may perform the uplink transmission simultaneously by using a transmitter corresponding to a plurality of antenna panels, the network device performs receiving by using a receiver. One antenna panel may be considered as one transmitter, or the plurality of antenna panels may be considered as one transmitter. This is not limited in this application.

According to the foregoing communication method, the terminal device may determine the actual transmit powers for the plurality of uplink transmissions performed simultaneously, to implement simultaneous performance of the plurality of uplink transmissions (for example, implement the simultaneous performance of the uplink transmissions by using a plurality of stations or antenna panels), thereby improving an uplink throughput.

In an embodiment, based on the embodiment shown in FIG. 5, under a specific condition, the terminal device may alternatively roll back from the simultaneous performance of the plurality of uplink transmissions (for example, multi-station/multi-panel transmission) to performance of a single uplink transmission (for example, single-station/single-panel transmission). For example, when an actual transmit power corresponding to an uplink transmission is very low, the simultaneous performance of the plurality of uplink transmissions is not as good as the performance of the single uplink transmission. In this case, the terminal device may roll back to the performance of the single uplink transmission, and notify the network device of information that the terminal device rolls back to the performance of the single uplink transmission. The following briefly describes a rollback condition and a rollback action in a process in which the terminal device uses a specific rollback action to roll back from the simultaneous performance of the plurality of uplink transmissions to the performance of the single uplink transmission under a specific rollback condition.

In an optional implementation, the rollback condition may include one or more of the following conditions:

(1) At least one expected transmit power is greater than an eleventh threshold, where the eleventh threshold may be a second maximum transmit power corresponding to the expected transmit power.

(2) Each of all expected transmit powers is greater than a twelfth threshold, where the twelfth threshold may be a second maximum transmit power corresponding to each expected transmit power.

(3) A sum of all expected transmit powers exceeds a thirteenth threshold, where the thirteenth threshold may be the first maximum transmit power Pcmax.

(4) A difference between or a ratio of at least two expected transmit powers is greater than a fourteenth threshold, where the fourteenth threshold may be a preset value.

(5) At least two uplink transmissions are respectively scheduled by using different downlink control information.

(6) After the second intermediate transmit powers are reduced based on the priorities of the uplink transmissions, a reduced second intermediate transmit power corresponding only to one uplink transmission is greater than a fifteenth threshold, where the fifteenth threshold may be 0, to be specific, a transmit power is allocated only to one uplink transmission, and an actual transmit power corresponding to another uplink transmission is 0.

It should be understood that, in addition to the foregoing conditions, the rollback condition may further include another condition, and the foregoing condition is further combined with the another condition as the rollback condition.

In an optional implementation, the rollback action is similar to the related rollback action that is in the embodiment shown in FIG. 3 and that is about rollback to the performance of the single uplink transmission, and mutual reference may be made. Details are not described herein again.

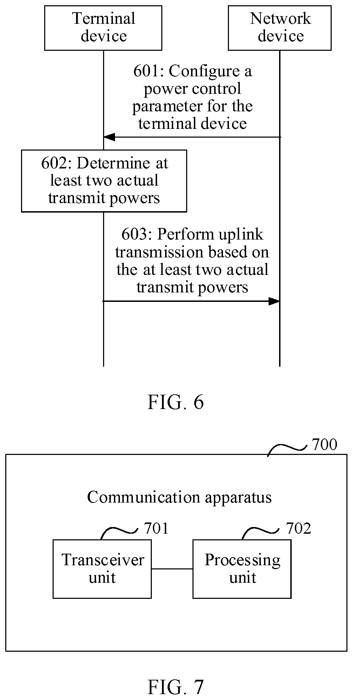

Based on the foregoing embodiment, the embodiments shown in FIG. 3 to FIG. 5 may be uniformly implemented by using a procedure of a communication method. For example, refer to a communication method shown in FIG. 6. A specific procedure of the method may include the following steps.

Step 601: A network device configures a power control parameter for a terminal device.

Specifically, for an explanation of configuring the power control parameter for the terminal device by the network device and an explanation of the power control parameter, refer to related descriptions in step 301 in the embodiment shown in FIG. 3. Details are not described herein again.

Step 602: The terminal device determines at least two actual transmit powers.

For a method in which the terminal device obtains the at least two actual transmit powers based on the power control parameter configured by the network device, refer to the method in which the terminal device determines the at least two actual transmit powers in step 301, step 401, or step 501 in the foregoing embodiments. Details are not described herein again.

Step 603: The terminal device performs uplink transmission based on the at least two actual transmit powers. To be specific, the terminal device transmits information, data, or the like to the network device by using the at least two actual transmit powers.

For example, when the terminal device may perform the uplink transmission simultaneously by using a transmitter corresponding to a plurality of antenna panels, the network device performs receiving by using a receiver. One antenna panel may be considered as one transmitter, or the plurality of antenna panels may be considered as one transmitter. This is not limited in this application.

According to the foregoing communication method, the terminal device may determine the actual transmit powers for the plurality of uplink transmissions performed simultaneously, to implement simultaneous performance of the plurality of uplink transmissions (for example, implement the simultaneous performance of the uplink transmissions by using a plurality of stations or antenna panels), thereby improving an uplink throughput.

Based on the foregoing embodiments, an embodiment of this application further provides a communication apparatus. Refer to FIG. 7, a communication apparatus 700 may include a transceiver unit 701 and a processing unit 702. The transceiver unit 701 is configured to receive a message (information or data) or send a message (information or data) for the communication apparatus 700, and the processing unit 702 is configured to control and manage an action of the communication apparatus 700. The processing unit 702 may further control steps performed by the transceiver unit 701.

For example, the communication apparatus 700 may specifically be the terminal device in the foregoing embodiments, or a processor, a chip, a chip system, a functional module, or the like in the terminal device.

In an embodiment, when the communication apparatus 700 is configured to implement a function of the terminal device in the foregoing embodiments, the processing unit 702 may be configured to determine at least two actual transmit powers based on at least two expected transmit powers, and a first maximum transmit power and/or at least two second maximum transmit powers; and the transceiver unit 701 may be configured to perform uplink transmission based on the at least two actual transmit powers, where the at least two expected transmit powers are in one-to-one correspondence with at least two uplink transmissions simultaneously performed by the terminal device, the first maximum transmit power is a maximum transmit power of the terminal device, the at least two second maximum transmit powers are in one-to-one correspondence with the at least two uplink transmissions, and the at least two actual transmit powers are in one-to-one correspondence with the at least two uplink transmissions.

In an optional implementation, when determining the at least two actual transmit powers based on the at least two expected transmit powers and the first maximum transmit power, the processing unit 702 may be configured to: compare a sum of the at least two expected transmit powers with the first maximum transmit power; and determine the at least two actual transmit powers based on a comparison result.

For example, when determining the at least two actual transmit powers based on the comparison result, the processing unit 702 may be configured to: when the comparison result is that the sum of the at least two expected transmit powers is less than or equal to the first maximum transmit power, determine that the at least two actual transmit powers are the at least two expected transmit powers; or when the comparison result is that the sum of the at least two expected transmit powers is greater than the first maximum transmit power, reduce powers of a part or all of the at least two expected transmit powers, to obtain the at least two actual transmit powers, or determine the at least two actual transmit powers based on priorities of the at least two uplink transmissions.

Optionally, when reducing the powers of the part or all of the at least two expected transmit powers, to obtain the at least two actual transmit powers, the processing unit 702 may be configured to: reduce a first expected transmit power by a first value, and determine that the at least two actual transmit powers are a reduced first expected transmit power and an expected transmit power other than the first expected transmit power in the at least two expected transmit powers, where the first expected transmit power is one of the at least two expected transmit powers, and the first value is a value greater than or equal to a difference between the sum of the at least two expected transmit powers and the first maximum transmit power; or

reduce each of the at least two expected transmit powers by a corresponding power reduction value, to obtain the at least two actual transmit powers, where the power reduction value corresponding to each expected transmit power is determined based on a difference between the sum of the at least two expected transmit powers and the first maximum transmit power.

Optionally, when determining the at least two actual transmit powers based on the priorities of the at least two uplink transmissions, the processing unit 702 may be configured to: sequentially reduce the at least two expected transmit powers in ascending order of the priorities of the at least two uplink transmissions, and determine at least two reduced expected transmit powers as the at least two actual transmit powers, where a sum of the at least two reduced expected transmit powers is less than or equal to the first maximum transmit power, and each reduced expected transmit power is greater than or equal to a first power value.

In another optional implementation, when determining the at least two actual transmit powers based on the at least two expected transmit powers and the at least two second maximum transmit powers, the processing unit 702 may be configured to determine a corresponding actual transmit power based on a value relationship between each expected transmit power and a second maximum transmit power corresponding to each expected transmit power.

In still another optional implementation, when determining the at least two actual transmit powers based on the at least two expected transmit powers, and the first maximum transmit power and the at least two second maximum transmit powers, the processing unit 702 may be configured to determine the at least two actual transmit powers based on the at least two expected transmit powers, and the first maximum transmit power and the at least two second maximum transmit powers and based on a first condition and a second condition, where the first condition may include: An actual transmit power corresponding to each uplink transmission is less than or equal to a second maximum transmit power corresponding to each uplink transmission; and the second condition may include: A sum of the at least two actual transmit powers is less than or equal to the first maximum transmit power.

In an example, when determining the at least two actual transmit powers based on the at least two expected transmit powers, and the first maximum transmit power and the at least two second maximum transmit powers and based on the first condition and the second condition, the processing unit 702 may be configured to: compare a sum of the at least two expected transmit powers with the first maximum transmit power based on the second condition, and determine at least two first intermediate transmit powers based on a comparison result, where the at least two first intermediate transmit powers are in one-to-one correspondence with the at least two expected transmit powers; and determine a corresponding actual transmit power based on a value relationship between a first intermediate transmit power corresponding to each expected transmit power and a second maximum transmit power corresponding to each expected transmit power and based on the first condition.

For example, when determining the at least two first intermediate transmit powers based on the comparison result, the processing unit 702 may be configured to: when the comparison result is that the sum of the at least two expected transmit powers is less than or equal to the first maximum transmit power, determine that the at least two first intermediate transmit powers are the at least two expected transmit powers; or when the comparison result is that the sum of the at least two expected transmit powers is greater than the first maximum transmit power, reduce powers of a part or all of the at least two expected transmit powers, to obtain the at least two first intermediate transmit powers, or determine the at least two first intermediate transmit powers based on the priorities of the at least two uplink transmissions.

In a possible implementation, when reducing the powers of the part or all of the at least two expected transmit powers, to obtain the at least two first intermediate transmit powers, the processing unit 702 may be configured to: reduce a first expected transmit power by a first value, and determine that the at least two first intermediate transmit powers are a reduced first expected transmit power and an expected transmit power other than the first expected transmit power in the at least two expected transmit powers, where the first expected transmit power is one of the at least two expected transmit powers, and the first value is a value greater than or equal to a difference between the sum of the at least two expected transmit powers and the first maximum transmit power; or
reduce each of the at least two expected transmit powers by a corresponding power reduction value, to obtain the at least two first intermediate transmit powers, where the power reduction value corresponding to each expected transmit power is determined based on a difference between the sum of the at least two expected transmit powers and the first maximum transmit power.

For example, that the first expected transmit power is one of the at least two expected transmit powers may include: The first expected transmit power may be a largest expected transmit power in the at least two expected transmit powers, or may be an expected transmit power corresponding to a lowest path loss in the at least two expected transmit powers, or may be an expected transmit power corresponding to a 1st uplink transmission in the at least two expected transmit powers, or may be an expected transmit power corresponding to a last uplink transmission in the at least two expected transmit powers.

Optionally, that the power reduction value corresponding to each expected transmit power is determined based on the difference between the sum of the at least two expected transmit powers and the first maximum transmit power may include: The power reduction value corresponding to each expected transmit power is a value for the at least two expected transmit powers that is obtained by equally dividing the difference between the sum of the at least two expected transmit powers and the first maximum transmit power; or the power reduction value corresponding to each expected transmit power is determined based on a ratio of each expected transmit power to the sum of the at least two expected transmit powers and the difference between the sum of the at least two expected transmit powers and the first maximum transmit power.

For example, when determining the at least two first intermediate transmit powers based on the priorities of the at least two uplink transmissions, the processing unit 702 may be configured to: sequentially reduce the at least two expected transmit powers in ascending order of the priorities of the at least two uplink transmissions, and determine at least two reduced expected transmit powers as the at least two first intermediate transmit powers, where a sum of the at least two reduced expected transmit powers is less than or equal to the first maximum transmit power, and each reduced expected transmit power is greater than or equal to a second power value.

In another example, when determining the at least two actual transmit powers based on the at least two expected transmit powers, and the first maximum transmit power and the at least two second maximum transmit powers and based on the first condition and the second condition, the processing unit 702 may be configured to: determine a corresponding second intermediate transmit power based on a value relationship between each expected transmit power and a second maximum transmit power corresponding to each expected transmit power and based on the first condition, to obtain at least two second intermediate transmit powers; and compare a sum of the at least two second intermediate transmit powers with the first maximum transmit power based on the second condition, and determine the at least two actual transmit powers based on a comparison result.

Optionally, when determining the at least two actual transmit powers based on the comparison result, the processing unit 702 may be configured to: when the comparison result is that the sum of the at least two second intermediate transmit powers is less than or equal to the first maximum transmit power, determine that the at least two actual transmit powers are the at least two second intermediate transmit powers; or when the comparison result is that the sum of the at least two second intermediate transmit powers is greater than the first maximum transmit power, reduce powers of a part or all of the at least two second intermediate transmit powers, to obtain the at least two actual transmit powers, or determine the at least two actual transmit powers based on priorities of the at least two uplink transmissions.

For example, when reducing the powers of the part or all of the at least two second intermediate transmit powers, to obtain the at least two actual transmit powers, the processing unit 702 may be configured to: reduce one second intermediate transmit power by a second value, and determine that the at least two actual transmit powers are a reduced second intermediate transmit power and a second intermediate transmit power other than the second intermediate transmit power in the at least two second intermediate transmit powers, where the second intermediate transmit power is one of the at least two second intermediate transmit powers, and the second value is a value greater than or equal to a difference between the sum of the at least two second intermediate transmit powers and the first maximum transmit power; or

reduce each of the at least two second intermediate transmit powers by a corresponding power reduction value, to obtain the at least two actual transmit powers, where the power reduction value corresponding to each second intermediate transmit power is determined based on a difference between the sum of the at least two second intermediate transmit powers and the first maximum transmit power.

In an optional implementation, that the second intermediate transmit power is one of the at least two second intermediate transmit powers may include: The second intermediate transmit power may be a largest second intermediate transmit power in the at least two second intermediate transmit powers, or may be a second intermediate transmit power corresponding to a lowest path loss in the at least two second intermediate transmit powers, or may be a second intermediate transmit power corresponding to a 1st uplink transmission in the at least two second intermediate transmit powers, or may be a second intermediate transmit power corresponding to a last uplink transmission in the at least two second intermediate transmit powers.

In an optional implementation, that the power reduction value corresponding to each second intermediate transmit power is determined based on the difference between the sum of the at least two second intermediate transmit powers and the first maximum transmit power may include: the power reduction value corresponding to each second intermediate transmit power is a value for the at least two second intermediate transmit powers that is obtained by equally dividing the difference between the sum of the at least two second intermediate transmit powers and the first maximum transmit power; and the power reduction value of each second intermediate transmit power is determined based on a ratio of each second intermediate transmit power to the sum of the at least two second intermediate transmit powers and the difference between the sum of the at least two second intermediate transmit powers and the first maximum transmit power.

For example, when determining the at least two actual transmit powers based on the priorities of the at least two uplink transmissions, the processing unit 702 may be configured to: sequentially reduce the at least two second intermediate transmit powers in ascending order of the priorities of the at least two uplink transmissions, and determine at least two reduced second intermediate transmit powers as the at least two actual transmit powers, where a sum of the at least two reduced second intermediate transmit powers is less than or equal to the first maximum transmit power, and each reduced second intermediate transmit power is greater than or equal to a third power value.

In a possible design, the priorities of the at least two uplink transmissions may be determined based on a transmission indication sequence corresponding to the at least two uplink transmissions; or the priorities of the at least two uplink transmissions may be determined based on values of the expected transmit powers corresponding to the at least two uplink transmissions; or the priorities of the at least two uplink transmissions may be determined based on values of path losses corresponding to the at least two uplink transmissions.

Optionally, the at least two second maximum transmit powers are equal, and a sum of the at least two second maximum transmit powers is equal to the first maximum transmit power. Alternatively, the at least two second maximum transmit powers meet one or more of the following conditions: The sum of the at least two second maximum transmit powers is less than or equal to a first threshold; a sum of actual radiated powers corresponding to the at least two second maximum transmit powers is less than or equal to a second threshold; a peak effective isotropic radiated power EIRP corresponding to each of the at least two second maximum transmit powers is less than or equal to a third threshold and is greater than or equal to a fourth threshold; and a sum of peak EIRPs corresponding to the at least two second maximum transmit powers is less than or equal to a fifth threshold and is greater than or equal to a sixth threshold.

For example, the first threshold and the second threshold may be preset upper limits of transmit powers.

In an example, the third threshold may be a preset upper limit of a peak EIRP; or the third threshold may be the preset upper limit of the peak EIRP minus a first offset and/or plus a second offset, where the first offset is related to a quantity of uplink transmissions performed simultaneously or antenna panels for uplink transmissions performed simultaneously, and the second offset is related to power aggregation.

For example, the fourth threshold may be a preset lower limit of the peak EIRP minus a third offset and a fourth offset, where the third offset is related to the quantity of uplink transmissions performed simultaneously or antenna panels for uplink transmissions performed simultaneously, and the fourth offset is determined based on a plurality of maximum power reduction indicators; or the fourth threshold is a preset lower limit of the peak EIRP minus the third offset and the fourth offset, and then plus a fifth offset, where the fifth offset is related to the power aggregation.

It should be noted that, in embodiments of this application, division into the units is an example, and is merely a logical function division. In actual implementation, another division manner may be used. Functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the prior art, or all or some of the technical solutions may be implemented in a form of a software product. The computer software product is stored in a storage medium and includes several instructions for instructing a computer device (which may be a personal computer, a server, a network device, or the like) or a processor (processor) to perform all or a part of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

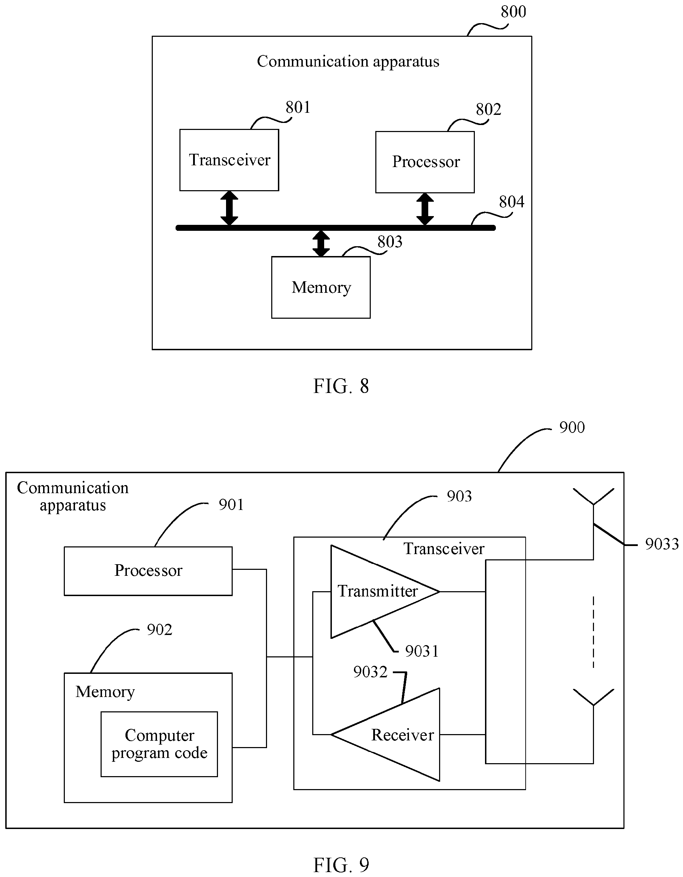

Based on the foregoing embodiments, an embodiment of this application further provides a communication apparatus. Refer to FIG. 8, a communication apparatus 800 may include a transceiver 801 and a processor 802. Optionally, the communication apparatus 800 may further include a memory 803. The memory 803 may be disposed inside the communication apparatus 800, or may be disposed outside the communication apparatus 800. The processor 802 may control the transceiver 801 to receive and send a message, information, data, or the like. The transceiver may be a transceiver or the like.

Specifically, the processor 802 may be a central processing unit (central processing unit, CPU), a network processor (network processor, NP), or a combination of the CPU and the NP. The processor 802 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL), or any combination thereof.

The transceiver 801, the processor 802, and the memory 803 are connected to each other. Optionally, the transceiver 801, the processor 802, and the memory 803 are connected to each other through a bus 804. The bus 804 may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, only one thick line is used to represent the bus in FIG. 8, but this does not mean that there is only one bus or only one type of bus.

In an optional implementation, the memory 803 is configured to store a program and the like. Specifically, the program may include program code, and the program code includes computer operation instructions. The memory 803 may include a RAM, and may further include a non-volatile memory (non-volatile memory), for example, one or more disk memories. The processor 802 executes an application program stored in the memory 803, to implement the foregoing function, thereby implementing a function of the communication apparatus 800.

For example, the communication apparatus 800 may be the terminal device in the foregoing embodiments, or a processor, a chip, a chip system, or the like in the terminal device.

In an embodiment, when the communication apparatus 800 implements a function of the terminal device in the embodiments shown in FIG. 3 to FIG. 6, the transceiver 801 may implement receiving and sending operations (that is, a transmission operation) performed by the terminal device in the foregoing embodiments, and the processor 802 may implement an operation other than the receiving and sending operations performed by the terminal device in the foregoing embodiments. Specifically, for related specific descriptions, refer to related descriptions in the embodiments shown in FIG. 3 to FIG. 6. Details are not described herein again.

This application further provides a communication apparatus 900. The communication apparatus 900 may be a terminal device, a processor of the terminal device, a chip, or the like. In an example, when the communication apparatus 900 is the terminal device, FIG. 9 is a diagram of a simplified structure of the terminal device. As shown in FIG. 9, the terminal device may include a processor 901, a memory 902, and a transceiver 903. The memory 902 may store computer program code. The transceiver 903 includes a transmitter 9031, a receiver 9032, a radio frequency circuit (not shown in FIG. 9), an antenna 9033, and an input/output apparatus (not shown in FIG. 9).

The processor 901 may be configured to process a communication protocol and communication data, control the terminal device, execute a software program, process data of the software program, and the like. The memory 902 is mainly configured to store the software program and the data. The radio frequency circuit is mainly configured to: perform conversion between a baseband signal and a radio frequency signal, and process the radio frequency signal. The antenna 9033 is mainly configured to receive and send a radio frequency signal in a form of an electromagnetic wave. The input/output apparatus, for example, a touchscreen, a display, or a keyboard, is mainly configured to receive data input by a user and output data to the user. It should be noted that some types of terminal devices may have no input/output apparatus.

When data needs to be sent, the processor 901 performs baseband processing on the to-be-sent data, and then outputs a baseband signal to the radio frequency circuit. The radio frequency circuit performs radio frequency processing on the baseband signal, and then sends a radio frequency signal in a form of an electromagnetic wave through the antenna 9033. When data is sent to the terminal device, the radio frequency circuit receives the radio frequency signal through the antenna 9033, converts the radio frequency signal into a baseband signal, and outputs the baseband signal to the processor 901. The processor 901 converts the baseband signal into data, and processes the data. For ease of description, FIG. 9 shows only one memory 902, one processor 901, and one transceiver 903. In an actual terminal device product, there may be one or more processors 901 and one or more memories 902. The memory 902 may also be referred to as a storage medium, a storage device, or the like. The memory 902 may be disposed independent of the processor 901, or may be integrated with the processor 901. This is not limited in this embodiment of this application.

In this application, the antenna and the radio frequency circuit that have receiving and sending functions may be considered as a transceiver module of the terminal device, and the processor that has a processing function may be considered as a processing module of the terminal.

For example, the processor 901 may also be referred to as a processing unit, a processing board, a processing module, a processing apparatus, or the like. The transceiver 903 may also be referred to as a transceiver unit, a transceiver machine, a transceiver apparatus, or the like.

Optionally, a component that is in the transceiver 903 and that is configured to implement a receiving function may be considered as a receiving unit, and a component that is in the transceiver 903 and that is configured to implement a sending function may be considered as a sending unit. In other words, the transceiver 903 includes the receiver and the transmitter. The transceiver 903 sometimes may also be referred to as a transceiver machine, a transceiver unit, a transceiver circuit, or the like. The receiver sometimes may also be referred to as a receiving machine, a receiving unit, a receiving circuit, or the like. The transmitter sometimes may also be referred to as a transmitting machine, a transmitting unit, a transmitting circuit, or the like.

Based on the foregoing embodiments, an embodiment of this application provides a communication system. The communication system may include the terminal device, the network device, and the like in the foregoing embodiments.

An embodiment of this application further provides a computer-readable storage medium. The computer-readable storage medium is configured to store a computer program. When the computer program is executed by a computer, the computer may implement a function of the terminal device in the embodiments shown in FIG. 3 to FIG. 6, and the like.

An embodiment of this application further provides a computer program product. The computer program product is configured to store a computer program. When the computer program is executed by a computer, the computer may implement a function of the terminal device in the embodiments shown in FIG. 3 to FIG. 6, and the like.

An embodiment of this application further provides a chip, including a processor. The processor is coupled to a memory, and is configured to invoke a program in the memory, so that the chip implements a function of the terminal device in the embodiments shown in FIG. 3 to FIG. 6, and the like.

An embodiment of this application further provides a chip. The chip is coupled to a memory, and the chip is configured to implement a function of the terminal device in the embodiments shown in FIG. 3 to FIG. 6, and the like.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

These computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

These computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. In this way, this application is intended to cover these modifications and variations of this application provided that they fall within the scope of protection defined by the claims of this application and their equivalent technologies.

**Claims**

1. A communication method, comprising:

   determining, by a terminal device, at least two actual transmit powers based on at least two expected transmit powers, and a first maximum transmit power and/or at least two second maximum transmit powers, wherein the at least two expected transmit powers are in one-to-one correspondence with at least two uplink transmissions simultaneously performed by the terminal device, the first maximum transmit power is a maximum transmit power of the terminal device, the at least two second maximum transmit powers are in one-to-one correspondence with the at least two uplink transmissions, and the at least two actual transmit powers are in one-to-one correspondence with the at least two uplink transmissions; and
   performing, by the terminal device, uplink transmission based on the at least two actual transmit powers.

2. The method according to claim 1, wherein the determining, by a terminal device, at least two actual transmit powers based on at least two expected transmit powers and a first maximum transmit power comprises:

   comparing, by the terminal device, a sum of the at least two expected transmit powers with the first maximum transmit power; and
   determining, by the terminal device, the at least two actual transmit powers based on a comparison result.

3. The method according to claim 2, wherein the determining, by the terminal device, the at least two actual transmit powers based on a comparison result comprises:

   when the comparison result is that the sum of the at least two expected transmit powers is less than or equal to the first maximum transmit power, determining, by the terminal device, that the at least two actual transmit powers are the at least two expected transmit powers; or
   when the comparison result is that the sum of the at least two expected transmit powers is greater than the first maximum transmit power, reducing, by the terminal device, powers of a part or all of the at least two expected transmit powers, to obtain the at least two actual transmit powers; or determining, by the terminal device, the at least two actual transmit powers based on priorities of the at least two uplink transmissions.

4. The method according to claim 3, wherein the reducing, by the terminal device, powers of a part or all of the at least two expected transmit powers, to obtain the at least two actual transmit powers comprises:

reducing, by the terminal device, a first expected transmit power by a first value, and determining that the at least two actual transmit powers are a reduced first expected transmit power and an expected transmit power other than the first expected transmit power in the at least two expected transmit powers, wherein the first expected transmit power is one of the at least two expected transmit powers, and the first value is a value greater than or equal to a difference between the sum of the at least two expected transmit powers and the first maximum transmit power; or

reducing, by the terminal device, each of the at least two expected transmit powers by a corresponding power reduction value, to obtain the at least two actual transmit powers, wherein the power reduction value corresponding to each expected transmit power is determined based on a difference between the sum of the at least two expected transmit powers and the first maximum transmit power.

5. The method according to claim 3, wherein the determining, by the terminal device, the at least two actual transmit powers based on priorities of the at least two uplink transmissions comprises:
sequentially reducing, by the terminal device, the at least two expected transmit powers in ascending order of the priorities of the at least two uplink transmissions, and determining at least two reduced expected transmit powers as the at least two actual transmit powers, wherein a sum of the at least two reduced expected transmit powers is less than or equal to the first maximum transmit power, and each reduced expected transmit power is greater than or equal to a first power value.

6. The method according to claim 1, wherein the determining, by a terminal device, at least two actual transmit powers based on at least two expected transmit powers and at least two second maximum transmit powers comprises:
determining, by the terminal device, a corresponding actual transmit power based on a value relationship between each expected transmit power and a second maximum transmit power corresponding to each expected transmit power.

7. The method according to claim 1, wherein the determining, by a terminal device, at least two actual transmit powers based on at least two expected transmit powers, and a first maximum transmit power and at least two second maximum transmit powers comprises:

determining, by the terminal device, the at least two actual transmit powers based on the at least two expected transmit powers, and the first maximum transmit power and the at least two second maximum transmit powers and based on a first condition and a second condition, wherein
the first condition comprises that an actual transmit power corresponding to each uplink transmission is less than or equal to a second maximum transmit power corresponding to each uplink transmission; and the second condition comprises that a sum of the at least two actual transmit powers is less than or equal to the first maximum transmit power.

8. The method according to claim 7, wherein the determining, by the terminal device, the at least two actual transmit powers based on the at least two expected transmit powers, and the first maximum transmit power and the at least two second maximum transmit powers and based on a first condition and a second condition comprises:

comparing, by the terminal device, a sum of the at least two expected transmit powers with the first maximum transmit power based on the second condition, and determining at least two first intermediate transmit powers based on a comparison result, wherein the at least two first intermediate transmit powers are in one-to-one correspondence with the at least two expected transmit powers; and
determining, by the terminal device, a corresponding actual transmit power based on a value relationship between a first intermediate transmit power corresponding to each expected transmit power and a second maximum transmit power corresponding to each expected transmit power and based on the first condition.

9. The method according to claim 8, wherein the determining, by the terminal device, at least two first intermediate transmit powers based on a comparison result comprises:

when the comparison result is that the sum of the at least two expected transmit powers is less than or equal to the first maximum transmit power, determining, by the terminal device, that the at least two first intermediate transmit powers are the at least two expected transmit powers; or
when the comparison result is that the sum of the at least two expected transmit powers is greater than the first maximum transmit power, reducing, by the terminal device, powers of a part or all of the at least two expected transmit powers, to obtain the at least two first intermediate transmit powers; or determining, by the terminal device, the at least two first intermediate transmit powers based on priorities of the at least two uplink transmissions.

10. The method according to claim 9, wherein the reducing, by the terminal device, powers of a part or all of the at least two expected transmit powers, to obtain the at least two first intermediate transmit powers comprises:

reducing, by the terminal device, a first expected transmit power by a first value, and determining that the at least two first intermediate transmit powers are a reduced first expected transmit power and an expected transmit power other than the first expected transmit power in the at least two expected transmit powers, wherein the first expected transmit power is one of the at least two expected transmit powers, and the first value is a value greater than or equal to a difference between the sum of the at least two expected transmit powers and the first maximum transmit power; or
reducing, by the terminal device, each of the at least two expected transmit powers by a corresponding power reduction value, to obtain the at least two first intermediate transmit powers, wherein the power reduction value corresponding to each expected transmit power is determined based on a difference between the sum of the at least two expected transmit powers and the first maximum transmit power.

11. The method according to claim 4 or 10, wherein that the first expected transmit power is one of the at least two expected transmit powers comprises:
the first expected transmit power is a largest expected transmit power in the at least two expected transmit powers, or an expected transmit power corresponding to a lowest path loss in the at least two expected transmit powers, or an expected transmit power corresponding to a $1^{st}$ uplink transmission in the at least two expected transmit powers, or an expected transmit power corresponding to a last uplink transmission in the at least two expected transmit powers.

12. The method according to claim 4 or 10, wherein that the power reduction value corresponding to each expected transmit power is determined based on a difference between the sum of the at least two expected transmit powers and the first maximum transmit power comprises:

the power reduction value corresponding to each expected transmit power is a value for the at least two expected transmit powers that is obtained by equally dividing the difference between the sum of the at least two expected transmit powers and the first maximum transmit power; or
the power reduction value corresponding to each expected transmit power is determined based on a ratio of each expected transmit power to the sum of the at least two expected transmit powers and the difference between the sum of the at least two expected transmit powers and the first maximum transmit power.

13. The method according to claim 9, wherein the determining, by the terminal device, the at least two first intermediate transmit powers based on priorities of the at least two uplink transmissions comprises:
sequentially reducing, by the terminal device, the at least two expected transmit powers in ascending order of the priorities of the at least two uplink transmissions, and determining at least two reduced expected transmit powers as the at least two first intermediate transmit powers, wherein a sum of the at least two reduced expected transmit powers is less than or equal to the first maximum transmit power, and each reduced expected transmit power is greater than or equal to a second power value.

14. The method according to claim 7, wherein the determining, by the terminal device, the at least two actual transmit powers based on the at least two expected transmit powers, and the first maximum transmit power and the at least two second maximum transmit powers and based on a first condition and a second condition comprises:

determining, by the terminal device, a corresponding second intermediate transmit power based on a value relationship between each expected transmit power and a second maximum transmit power corresponding to each expected transmit power and based on the first condition, to obtain at least two second intermediate transmit powers; and
comparing, by the terminal device, a sum of the at least two second intermediate transmit powers with the first maximum transmit power based on the second condition, and determining the at least two actual transmit powers based on a comparison result.

15. The method according to claim 14, wherein the determining, by the terminal device, the at least two actual transmit powers based on a comparison result comprises:

when the comparison result is that the sum of the at least two second intermediate transmit powers is less than or equal to the first maximum transmit power, determining, by the terminal device, that the at least two actual transmit powers are the at least two second intermediate transmit powers; or

when the comparison result is that the sum of the at least two second intermediate transmit powers is greater than the first maximum transmit power, reducing, by the terminal device, powers of a part or all of the at least two second intermediate transmit powers, to obtain the at least two actual transmit powers; or determining, by the terminal device, the at least two actual transmit powers based on priorities of the at least two uplink transmissions.

16. The method according to claim 15, wherein the reducing, by the terminal device, powers of a part or all of the at least two second intermediate transmit powers, to obtain the at least two actual transmit powers comprises:

reducing, by the terminal device, a second intermediate transmit power by a second value, and determining that the at least two actual transmit powers are a reduced second intermediate transmit power and a second intermediate transmit power other than the second intermediate transmit power in the at least two second intermediate transmit powers, wherein the second intermediate transmit power is one of the at least two second intermediate transmit powers, and the second value is a value greater than or equal to a difference between the sum of the at least two second intermediate transmit powers and the first maximum transmit power; or

reducing, by the terminal device, each of the at least two second intermediate transmit powers by a corresponding power reduction value, to obtain the at least two actual transmit powers, wherein the power reduction value corresponding to each second intermediate transmit power is determined based on a difference between the sum of the at least two second intermediate transmit powers and the first maximum transmit power.

17. The method according to claim 16, wherein that the second intermediate transmit power is one of the at least two second intermediate transmit powers comprises:

the second intermediate transmit power is a largest second intermediate transmit power in the at least two second intermediate transmit powers, or a second intermediate transmit power corresponding to a lowest path loss in the at least two second intermediate transmit powers, or a second intermediate transmit power corresponding to a $1^{st}$ uplink transmission in the at least two second intermediate transmit powers, or a second intermediate transmit power corresponding to a last uplink transmission in the at least two second intermediate transmit powers.

18. The method according to claim 16, wherein that the power reduction value corresponding to each second intermediate transmit power is determined based on a difference between the sum of the at least two second intermediate transmit powers and the first maximum transmit power comprises:

the power reduction value corresponding to each second intermediate transmit power is a value for the at least two second intermediate transmit powers that is obtained by equally dividing the difference between the sum of the at least two second intermediate transmit powers and the first maximum transmit power; or

the power reduction value of each second intermediate transmit power is determined based on a ratio of each second intermediate transmit power to the sum of the at least two second intermediate transmit powers and the difference between the sum of the at least two second intermediate transmit powers and the first maximum transmit power.

19. The method according to claim 15, wherein the determining, by the terminal device, the at least two actual transmit powers based on priorities of the at least two uplink transmissions comprises:

sequentially reducing, by the terminal device, the at least two second intermediate transmit powers in ascending order of the priorities of the at least two uplink transmissions, and determining at least two reduced second intermediate transmit powers as the at least two actual transmit powers, wherein a sum of the at least two reduced second intermediate transmit powers is less than or equal to the first maximum transmit power, and each reduced second intermediate transmit power is greater than or equal to a third power value.

20. The method according to claim 3, 5, 9, 13, 15, or 19, wherein the priorities of the at least two uplink transmissions are determined based on a transmission indication sequence corresponding to the at least two uplink transmissions;

the priorities of the at least two uplink transmissions are determined based on values of the expected transmit powers corresponding to the at least two uplink transmissions; or

the priorities of the at least two uplink transmissions are determined based on values of path losses corresponding to the at least two uplink transmissions.

21. The method according to any one of claims 1 to 20, wherein the at least two second maximum transmit powers are equal, and a sum of the at least two second maximum transmit powers is equal to the first maximum transmit power; or the at least two second maximum transmit powers meet one or more of the following conditions:

the sum of the at least two second maximum transmit powers is less than or equal to a first threshold;
a sum of actual radiated powers corresponding to the at least two second maximum transmit powers is less than or equal to a second threshold;
a peak effective isotropic radiated power EIRP corresponding to each of the at least two second maximum transmit powers is less than or equal to a third threshold and is greater than or equal to a fourth threshold; and
a sum of peak EIRPs corresponding to the at least two second maximum transmit powers is less than or equal to a fifth threshold and is greater than or equal to a sixth threshold.

22. The method according to claim 21, wherein the first threshold and the second threshold are preset upper limits of transmit powers.

23. The method according to claim 21 or 22, wherein the third threshold is a preset upper limit of a peak EIRP; or the third threshold is the preset upper limit of the peak EIRP minus a first offset and/or plus a second offset, wherein the first offset is related to a quantity of uplink transmissions performed simultaneously or antenna panels for uplink transmissions performed simultaneously, and the second offset is related to power aggregation.

24. The method according to any one of claims 21 to 23, wherein the fourth threshold is a preset lower limit of the peak EIRP minus a third offset and a fourth offset, the third offset is related to the quantity of uplink transmissions performed simultaneously or the antenna panels for the uplink transmissions performed simultaneously, and the fourth offset is determined based on a plurality of maximum power reduction indicators; or the fourth threshold is the preset lower limit of the peak EIRP minus the third offset and the fourth offset, and then plus a fifth offset, and the fifth offset is related to the power aggregation.

25. A communication apparatus, comprising:

a processing unit, configured to determine at least two actual transmit powers based on at least two expected transmit powers, and a first maximum transmit power and/or at least two second maximum transmit powers, wherein the at least two expected transmit powers are in one-to-one correspondence with at least two uplink transmissions simultaneously performed by a terminal device, the first maximum transmit power is a maximum transmit power of the terminal device, the at least two second maximum transmit powers are in one-to-one correspondence with the at least two uplink transmissions, and the at least two actual transmit powers are in one-to-one correspondence with the at least two uplink transmissions; and
a transceiver unit, configured to perform uplink transmission based on the at least two actual transmit powers.

26. The apparatus according to claim 25, wherein when determining the at least two actual transmit powers based on the at least two expected transmit powers and the first maximum transmit power, the processing unit is configured to:

compare a sum of the at least two expected transmit powers with the first maximum transmit power; and
determine the at least two actual transmit powers based on a comparison result.

27. The apparatus according to claim 26, wherein when determining the at least two actual transmit powers based on the comparison result, the processing unit is configured to:

when the comparison result is that the sum of the at least two expected transmit powers is less than or equal to the first maximum transmit power, determine that the at least two actual transmit powers are the at least two expected transmit powers; or
when the comparison result is that the sum of the at least two expected transmit powers is greater than the first maximum transmit power, reduce powers of a part or all of the at least two expected transmit powers, to obtain the at least two actual transmit powers; or determine the at least two actual transmit powers based on priorities of the at least two uplink transmissions.

28. The apparatus according to claim 27, wherein when reducing the powers of the part or all of the at least two expected transmit powers, to obtain the at least two actual transmit powers, the processing unit is configured to:

reduce a first expected transmit power by a first value, and determine that the at least two actual transmit powers are a reduced first expected transmit power and an expected transmit power other than the first expected transmit power in the at least two expected transmit powers, wherein the first expected transmit power is one of the at least two expected transmit powers, and the first value is a value greater than or equal to a difference between the sum of the at least two expected transmit powers and the first maximum transmit power; or

reduce each of the at least two expected transmit powers by a corresponding power reduction value, to obtain the at least two actual transmit powers, wherein the power reduction value corresponding to each expected transmit power is determined based on a difference between the sum of the at least two expected transmit powers and the first maximum transmit power.

29. The apparatus according to claim 27, wherein when determining the at least two actual transmit powers based on the priorities of the at least two uplink transmissions, the processing unit is configured to:

sequentially reduce the at least two expected transmit powers in ascending order of the priorities of the at least two uplink transmissions, and determine at least two reduced expected transmit powers as the at least two actual transmit powers, wherein a sum of the at least two reduced expected transmit powers is less than or equal to the first maximum transmit power, and each reduced expected transmit power is greater than or equal to a first power value.

30. The apparatus according to claim 25, wherein when determining the at least two actual transmit powers based on the at least two expected transmit powers and the at least two second maximum transmit powers, the processing unit is configured to:

determine the corresponding actual transmit power based on a value relationship between each expected transmit power and a second maximum transmit power corresponding to each expected transmit power.

31. The apparatus according to claim 25, wherein when determining the at least two actual transmit powers based on the at least two expected transmit powers, and the first maximum transmit power and the at least two second maximum transmit powers, the processing unit is configured to:

determine the at least two actual transmit powers based on the at least two expected transmit powers, and the first maximum transmit power and the at least two second maximum transmit powers and based on a first condition and a second condition, wherein

the first condition comprises that an actual transmit power corresponding to each uplink transmission is less than or equal to a second maximum transmit power corresponding to each uplink transmission; and the second condition comprises that a sum of the at least two actual transmit powers is less than or equal to the first maximum transmit power.

32. The apparatus according to claim 31, wherein when determining the at least two actual transmit powers based on the at least two expected transmit powers, and the first maximum transmit power and the at least two second maximum transmit powers and based on the first condition and the second condition, the processing unit is configured to:

compare a sum of the at least two expected transmit powers with the first maximum transmit power based on the second condition, and determine at least two first intermediate transmit powers based on a comparison result, wherein the at least two first intermediate transmit powers are in one-to-one correspondence with the at least two expected transmit powers; and

determine the corresponding actual transmit power based on a value relationship between a first intermediate transmit power corresponding to each expected transmit power and a second maximum transmit power corresponding to each expected transmit power and based on the first condition.

33. The apparatus according to claim 32, wherein when determining the at least two first intermediate transmit powers based on the comparison result, the processing unit is configured to:

when the comparison result is that the sum of the at least two expected transmit powers is less than or equal to the first maximum transmit power, determine that the at least two first intermediate transmit powers are the at least two expected transmit powers; or

when the comparison result is that the sum of the at least two expected transmit powers is greater than the first maximum transmit power, reduce powers of a part or all of the at least two expected transmit powers, to obtain the at least two first intermediate transmit powers; or determine the at least two first intermediate transmit powers based on priorities of the at least two uplink transmissions.

**34.** The apparatus according to claim 33, wherein when reducing the powers of the part or all of the at least two expected transmit powers, to obtain the at least two first intermediate transmit powers, the processing unit is configured to:

reduce a first expected transmit power by a first value, and determine that the at least two first intermediate transmit powers are a reduced first expected transmit power and an expected transmit power other than the first expected transmit power in the at least two expected transmit powers, wherein the first expected transmit power is one of the at least two expected transmit powers, and the first value is a value greater than or equal to a difference between the sum of the at least two expected transmit powers and the first maximum transmit power; or reduce each of the at least two expected transmit powers by a corresponding power reduction value, to obtain the at least two first intermediate transmit powers, wherein the power reduction value corresponding to each expected transmit power is determined based on a difference between the sum of the at least two expected transmit powers and the first maximum transmit power.

**35.** The apparatus according to claim 28 or 34, wherein that the first expected transmit power is one of the at least two expected transmit powers comprises:
the first expected transmit power is a largest expected transmit power in the at least two expected transmit powers, or an expected transmit power corresponding to a lowest path loss in the at least two expected transmit powers, or an expected transmit power corresponding to a 1st uplink transmission in the at least two expected transmit powers, or an expected transmit power corresponding to a last uplink transmission in the at least two expected transmit powers.

**36.** The apparatus according to claim 28 or 34, wherein that the power reduction value corresponding to each expected transmit power is determined based on a difference between the sum of the at least two expected transmit powers and the first maximum transmit power comprises:

the power reduction value corresponding to each expected transmit power is a value for the at least two expected transmit powers that is obtained by equally dividing the difference between the sum of the at least two expected transmit powers and the first maximum transmit power; or
the power reduction value corresponding to each expected transmit power is determined based on a ratio of each expected transmit power to the sum of the at least two expected transmit powers and the difference between the sum of the at least two expected transmit powers and the first maximum transmit power.

**37.** The apparatus according to claim 33, wherein when determining the at least two first intermediate transmit powers based on the priorities of the at least two uplink transmissions, the processing unit is configured to:
sequentially reduce the at least two expected transmit powers in ascending order of the priorities of the at least two uplink transmissions, and determine at least two reduced expected transmit powers as the at least two first intermediate transmit powers, wherein a sum of the at least two reduced expected transmit powers is less than or equal to the first maximum transmit power, and each reduced expected transmit power is greater than or equal to a second power value.

**38.** The apparatus according to claim 31, wherein when determining the at least two actual transmit powers based on the at least two expected transmit powers, and the first maximum transmit power and the at least two second maximum transmit powers and based on the first condition and the second condition, the processing unit is configured to:

determine a corresponding second intermediate transmit power based on a value relationship between each expected transmit power and a second maximum transmit power corresponding to each expected transmit power and based on the first condition, to obtain at least two second intermediate transmit powers; and
compare a sum of the at least two second intermediate transmit powers with the first maximum transmit power based on the second condition, and determine the at least two actual transmit powers based on a comparison result.

**39.** The apparatus according to claim 38, wherein when determining the at least two actual transmit powers based on the comparison result, the processing unit is configured to:

when the comparison result is that the sum of the at least two second intermediate transmit powers is less than or equal to the first maximum transmit power, determine that the at least two actual transmit powers are the at least two second intermediate transmit powers; or
when the comparison result is that the sum of the at least two second intermediate transmit powers is greater than the first maximum transmit power, reduce powers of a part or all of the at least two second intermediate transmit powers, to obtain the at least two actual transmit powers; or determine the at least two actual transmit powers based on priorities of the at least two uplink transmissions.

40. The apparatus according to claim 39, wherein when reducing the powers of the part or all of the at least two second intermediate transmit powers, to obtain the at least two actual transmit powers, the processing unit is configured to:

reduce a second intermediate transmit power by a second value, and determine that the at least two actual transmit powers are a reduced second intermediate transmit power and a second intermediate transmit power other than the second intermediate transmit power in the at least two second intermediate transmit powers, wherein the second intermediate transmit power is one of the at least two second intermediate transmit powers, and the second value is a value greater than or equal to a difference between the sum of the at least two second intermediate transmit powers and the first maximum transmit power; or
reduce each of the at least two second intermediate transmit powers by a corresponding power reduction value, to obtain the at least two actual transmit powers, wherein the power reduction value corresponding to each second intermediate transmit power is determined based on a difference between the sum of the at least two second intermediate transmit powers and the first maximum transmit power.

41. The apparatus according to claim 40, wherein that the second intermediate transmit power is one of the at least two second intermediate transmit powers comprises:
the second intermediate transmit power is a largest second intermediate transmit power in the at least two second intermediate transmit powers, or a second intermediate transmit power corresponding to a lowest path loss in the at least two second intermediate transmit powers, or a second intermediate transmit power corresponding to a 1st uplink transmission in the at least two second intermediate transmit powers, or a second intermediate transmit power corresponding to a last uplink transmission in the at least two second intermediate transmit powers.

42. The apparatus according to claim 40, wherein that the power reduction value corresponding to each second intermediate transmit power is determined based on a difference between the sum of the at least two second intermediate transmit powers and the first maximum transmit power comprises:

the power reduction value corresponding to each second intermediate transmit power is a value for the at least two second intermediate transmit powers that is obtained by equally dividing the difference between the sum of the at least two second intermediate transmit powers and the first maximum transmit power; or
the power reduction value of each second intermediate transmit power is determined based on a ratio of each second intermediate transmit power to the sum of the at least two second intermediate transmit powers and the difference between the sum of the at least two second intermediate transmit powers and the first maximum transmit power.

43. The apparatus according to claim 39, wherein when determining the at least two actual transmit powers based on the priorities of the at least two uplink transmissions, the processing unit is configured to:
sequentially reduce the at least two second intermediate transmit powers in ascending order of the priorities of the at least two uplink transmissions, and determine at least two reduced second intermediate transmit powers as the at least two actual transmit powers, wherein a sum of the at least two reduced second intermediate transmit powers is less than or equal to the first maximum transmit power, and each reduced second intermediate transmit power is greater than or equal to a third power value.

44. The apparatus according to claim 27, 29, 33, 37, 39, or 43, wherein the priorities of the at least two uplink transmissions are determined based on a transmission indication sequence corresponding to the at least two uplink transmissions;

the priorities of the at least two uplink transmissions are determined based on values of the expected transmit powers corresponding to the at least two uplink transmissions; or
the priorities of the at least two uplink transmissions are determined based on values of path losses corresponding to the at least two uplink transmissions.

45. The apparatus according to any one of claims 25 to 44, wherein the at least two second maximum transmit powers are equal, and a sum of the at least two second maximum transmit powers is equal to the first maximum transmit power; or
the at least two second maximum transmit powers meet one or more of the following conditions:

the sum of the at least two second maximum transmit powers is less than or equal to a first threshold;

a sum of actual radiated powers corresponding to the at least two second maximum transmit powers is less than or equal to a second threshold;

a peak effective isotropic radiated power EIRP corresponding to each of the at least two second maximum transmit powers is less than or equal to a third threshold and is greater than or equal to a fourth threshold; and

a sum of peak EIRPs corresponding to the at least two second maximum transmit powers is less than or equal to a fifth threshold and is greater than or equal to a sixth threshold.

46. The apparatus according to claim 45, wherein the first threshold and the second threshold are preset upper limits of transmit powers.

47. The apparatus according to claim 45 or 46, wherein the third threshold is a preset upper limit of a peak EIRP; or the third threshold is the preset upper limit of the peak EIRP minus a first offset and/or plus a second offset, wherein the first offset is related to a quantity of uplink transmissions performed simultaneously or antenna panels for uplink transmissions performed simultaneously, and the second offset is related to power aggregation.

48. The apparatus according to any one of claims 45 to 47, wherein the fourth threshold is a preset lower limit of the peak EIRP minus a third offset and a fourth offset, the third offset is related to the quantity of uplink transmissions performed simultaneously or the antenna panels for the uplink transmissions performed simultaneously, and the fourth offset is determined based on a plurality of maximum power reduction indicators; or the fourth threshold is the preset lower limit of the peak EIRP minus the third offset and the fourth offset, and then plus a fifth offset, and the fifth offset is related to the power aggregation.

49. A communication apparatus, comprising a memory, a processor, and a transceiver, wherein

the memory is configured to store computer instructions;

the transceiver is configured to receive and send information or data; and

the processor is coupled to the memory, and is configured to invoke the computer instructions in the memory, to perform the method according to any one of claims 1 to 24 by using the transceiver.

50. A computer-readable storage medium, wherein the computer-readable storage medium stores computer-executable instructions; and when the computer-executable instructions are invoked by a computer, the method according to any one of claims 1 to 24 is performed.

51. A computer program product, comprising instructions, wherein when the instructions are run on a computer, the method according to any one of claims 1 to 24 is enabled to be performed.

52. A chip, wherein the chip is coupled to a memory, and is configured to read and execute program instructions stored in the memory, to implement the method according to any one of claims 1 to 24.

FIG. 1

FIG. 2a

FIG. 2b

FIG. 3

```
┌─────────────┐                    ┌─────────────┐
│  Terminal   │                    │  Network    │
│   device    │                    │   device    │
└─────────────┘                    └─────────────┘
```

401: Determine at least two actual transmit powers based on at least two expected transmit powers and at least two second maximum transmit powers

402: Perform uplink transmission based on the at least two actual transmit powers

FIG. 4

```
┌─────────────┐                    ┌─────────────┐
│  Terminal   │                    │  Network    │
│   device    │                    │   device    │
└─────────────┘                    └─────────────┘
```

501: Determine at least two actual transmit powers based on at least two expected transmit powers, and a first maximum transmit power and at least two second maximum transmit powers

502: Perform uplink transmission based on the at least two actual transmit powers

FIG. 5

```
┌──────────┐                    ┌──────────┐
│ Terminal │                    │ Network  │
│  device  │                    │  device  │
└──────────┘                    └──────────┘
     │                               │
     │      601: Configure a         │
     │        power control          │
     │      parameter for the        │
     │        terminal device        │
     │◄──────────────────────────────│
┌──────────────────┐                 │
│ 602: Determine at│                 │
│  least two actual│                 │
│  transmit powers │                 │
└──────────────────┘                 │
     │                               │
     │     603: Perform uplink       │
     │    transmission based on      │
     │    the at least two actual    │
     │       transmit powers         │
     │──────────────────────────────►│
     │                               │
```

FIG. 6

700

```
┌──────────────────────────────────────────┐
│                                            │
│        Communication apparatus             │
│                                            │
│          701             702               │
│    ┌───────────┐    ┌───────────┐          │
│    │Transceiver│────│ Processing│          │
│    │   unit    │    │    unit   │          │
│    └───────────┘    └───────────┘          │
│                                            │
└──────────────────────────────────────────┘
```

FIG. 7

800

Communication apparatus

801
Transceiver

802
Processor

804

803
Memory

FIG. 8

900

Communication apparatus

901
Processor

903
Transceiver

9033

Transmitter

9031

902

9032

Memory

Computer program code

Receiver

FIG. 9

## INTERNATIONAL SEARCH REPORT

| | International application No. |
|---|---|
| | **PCT/CN2023/077371** |

### A. CLASSIFICATION OF SUBJECT MATTER

H04W52/14(2009.01)i

According to International Patent Classification (IPC) or to both national classification and IPC

### B. FIELDS SEARCHED

Minimum documentation searched (classification system followed by classification symbols)

IPC:H04W H04L H04Q

Documentation searched other than minimum documentation to the extent that such documents are included in the fields searched

Electronic data base consulted during the international search (name of data base and, where practicable, search terms used)

CNTXT; WPABS; WPABSC; ENTXT; ENTXTC; CJFD; 3GPP; IEEE: 发射功率, 最大发射功率, 面板, 天线端口, 上行传输, 两, 多, transmi+ power, max+ transmi+ power, panel?, port?, uplink transmission, two, multi+

### C. DOCUMENTS CONSIDERED TO BE RELEVANT

| Category* | Citation of document, with indication, where appropriate, of the relevant passages | Relevant to claim No. |
|---|---|---|
| X | CN 110167168 A (HUAWEI TECHNOLOGIES CO., LTD.) 23 August 2019 (2019-08-23) description, paragraphs [0095]-[0213] | 1-5, 20, 25-29, 35-36, 44, 49-52 |
| X | CN 109565757 A (GUANGDONG OPPO MOBILE COMMUNICATIONS CO., LTD.) 02 April 2019 (2019-04-02) description, paragraphs [0050]-[0119] | 1, 6, 25, 30, 49-52 |
| Y | CN 110167168 A (HUAWEI TECHNOLOGIES CO., LTD.) 23 August 2019 (2019-08-23) description, paragraphs [0095]-[0213] | 7-19, 21-24, 31-34, 37-43, 45-48 |
| Y | CN 109565757 A (GUANGDONG OPPO MOBILE COMMUNICATIONS CO., LTD.) 02 April 2019 (2019-04-02) description, paragraphs [0050]-[0119] | 7-19, 21-24, 31-34, 37-43, 45-48 |
| A | CN 113965924 A (HUAWEI TECHNOLOGIES CO., LTD.) 21 January 2022 (2022-01-21) entire document | 1-52 |
| A | WO 2021138884 A1 (QUALCOMM INC.; WU LIANGMING; HAO CHENXI; ZHANG YU; HUANG MIN; WEI CHAO; HUANG YI) 15 July 2021 (2021-07-15) entire document | 1-52 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 June 2023** | **06 June 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/077371**

| Patent document cited in search report | | | Publication date (day/month/year) | Patent family member(s) | | | Publication date (day/month/year) |
|---|---|---|---|---|---|---|---|
| CN | 110167168 | A | 23 August 2019 | WO | 2019158064 | A1 | 22 August 2019 |
| | | | | EP | 3754885 | A1 | 23 December 2020 |
| | | | | EP | 3754885 | A4 | 07 April 2021 |
| | | | | US | 2020374814 | A1 | 26 November 2020 |
| | | | | US | 11234198 | B2 | 25 January 2022 |
| CN | 109565757 | A | 02 April 2019 | US | 2020154362 | A1 | 14 May 2020 |
| | | | | US | 11089553 | B2 | 10 August 2021 |
| | | | | WO | 2020037447 | A1 | 27 February 2020 |
| | | | | WO | 2020037447 | A9 | 18 February 2021 |
| | | | | EP | 3644657 | A1 | 29 April 2020 |
| | | | | EP | 3644657 | A4 | 22 July 2020 |
| | | | | EP | 3644657 | B1 | 07 April 2021 |
| CN | 113965924 | A | 21 January 2022 | None | | | |
| WO | 2021138884 | A1 | 15 July 2021 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210201572